# EUROPEAN PATENT APPLICATION

(11) **EP 4 624 221 A2**
(43) Date of publication of application: **01.10.2025**
(21) Application number: 25161483.0
(22) Date of filing: 04.03.2025
(51) Int. Cl.: B60K 37/20

(54) **WORK VEHICLE**

(30) Priority: 25.03.2024 JP 2024047747; 25.03.2024 JP 2024047749; 25.03.2024 JP 2024047752; 25.03.2024 JP 2024047755
(71) Applicant: Yanmar Holdings Co., Ltd., Osaka-shi, Osaka (JP)
(72) Inventor: NOMOTO, Soshi, Okayama (JP); NAKAGAWA, Yohei, Okayama (JP); ISHINO, Tatsuya, Okayama (JP); SHIMIZU, Hinoki, Okayama (JP)
(74) Representative: Novagraaf International SA

(57) **Abstract**

[Problem]A technique capable of appropriately disposing a quantum compass in a work vehicle and a technique suitable for a work vehicle including a positioning device are provided.

[Solution]An exemplary work vehicle includes a driving compartment having a floor, a power transmission portion disposed below the floor, a dashboard portion provided in a front portion of the driving compartment, and a quantum compass, the quantum compass being provided in the dashboard portion disposed between the driving compartment or the floor and the power transmission portion, or in the seat portion or the vicinity thereof.

## Description

### TECHNICAL FIELD

The present invention relates to a work vehicle.

### BACKGROUND ART

Conventionally, a work vehicle is known having a function of acquiring position information of a vehicle itself for automatic traveling, recording of work information, theft prevention, or the like. Conventionally, a positioning satellite has been used to acquire the position information of the vehicle itself. Patent Document 1 discloses a work vehicle including a global navigation satellite system (GNSS) antenna that acquires information (satellite information) from a positioning satellite. Patent Document 2 discloses a work vehicle including a positioning unit that acquires information (satellite information) from a positioning satellite.

### PRIOR ART DOCUMENT

### PATENT DOCUMENT

Patent Document 1: JP 2018-129654 A
Patent Document 2: JP 2021-54408 A

### SUMMARY OF INVENTION

### TECHNICAL PROBLEM

In a configuration in which satellite information is used to acquire position information of a vehicle itself, it is necessary to dispose a positioning antenna at a position where the positioning antenna can easily communicate with a satellite, and thus there is a restriction on the arrangement of the positioning device. In addition, the accuracy of position information that can be acquired may decrease due to the influence of a communication environment. In this regard, when a quantum compass is used as the positioning device for obtaining position information of a work vehicle, communication with the satellite is not required, and thus it is considered that the degree of freedom of disposition of the positioning device is increased. However, an operating environment of the work vehicle is harsher than that of a regular automobile. For example, there is more dust and dirt, and vibrations during traveling tend to be greater. That is, when the quantum compass or the positioning device is disposed in the work vehicle, it is necessary to devise the disposition in consideration of the harsh operating environment.

An object of the present invention is to provide a technique capable of appropriately disposing the quantum compass in the work vehicle or a technique suitable for the work vehicle including the positioning device.

### SOLUTION TO PROBLEM

An exemplary work vehicle according to the present invention includes a driving compartment having a floor, a power transmission portion disposed below the floor, a seat portion supported by the floor, a dashboard portion provided in a front portion of the driving compartment, and a quantum compass. The quantum compass is provided in the dashboard portion disposed between the floor and the power transmission portion, or in the seat portion or the vicinity thereof. Further, an exemplary work vehicle according to the present invention includes a cabin and a quantum compass provided in the cabin.

### ADVANTAGEOUS EFFECTS OF INVENTION

According to the exemplary present invention, a quantum compass can be disposed at an appropriate location of a work vehicle. An examplary work vehicle according to the present invention can appropriately acquire position information while suppressing the influence of a communication environment, a harsh operating environment during work, or the like.

### BRIEF DESCRIPTION OF DRAWINGS

FIG. 1 is a side view illustrating a schematic configuration of a work vehicle.
FIG. 2 is a plan view illustrating the schematic configuration of the work vehicle.
FIG. 3 is a perspective view illustrating a schematic configuration of a driving compartment base portion constituting a driving compartment.
FIG. 4 illustrates a state where a seat portion is attached to the driving compartment base portion illustrated in FIG. 3.
FIG. 5 is a side view illustrating the schematic configuration of the driving compartment base portion constituting the driving compartment.
FIG. 6 is a side view illustrating a schematic configuration of a work vehicle according to another embodiment to which the present invention is applicable.
FIG. 7 is a perspective view illustrating a schematic configuration of a driving compartment base portion in the cabin-type work vehicle illustrated in FIG. 6.
FIG. 8 is a schematic view illustrating a relationship between a floor and a power transmission portion.
FIG. 9 is a longitudinal sectional view illustrating a schematic configuration of a dashboard portion.
FIG. 10A is a side view schematically illustrating a first example of a disposition of a quantum compass.
FIG. 10B is a rear view schematically illustrating the first example of the disposition of the quantum compass.
FIG. 11 illustrates a variation of the first example.
FIG. 12A is a side view schematically illustrating a second example of the disposition of the quantum compass.
FIG. 12B is a rear view schematically illustrating the second example of the disposition of the quantum compass.
FIG. 13 is a rear view schematically illustrating a third example of the disposition of the quantum compass.
FIG. 14 illustrates a first variation of the third example of the disposition of the quantum compass.
FIG. 15 illustrates a second variation of the third example of the disposition of the quantum compass.
FIG. 16 is a rear view schematically illustrating a fourth example of the disposition of the quantum compass.
FIG. 17 is a side view schematically illustrating a fifth example of the disposition of the quantum compass.
FIG. 18 illustrates a variation of the fifth example of the disposition of the quantum compass.
FIG. 19 is a side view schematically illustrating a sixth example of the disposition of the quantum compass.
FIG. 20 schematically illustrates a seventh example of the disposition of the quantum compass.
FIG. 21A is a cross-sectional view schematically illustrating an eighth example of the disposition of the quantum compass.
FIG. 21B is a longitudinal sectional view schematically illustrating the eighth example of the disposition of the quantum compass.
FIG. 22 schematically illustrates a ninth example of the disposition of the quantum compass.
FIG. 23 schematically illustrates a tenth example of the disposition of the quantum compass.
FIG. 24 is a longitudinal sectional view schematically illustrating an eleventh example of the disposition of the quantum compass.
FIG. 25 is a schematic diagram for describing a twelfth example of the disposition of the quantum compass, illustrating the seat portion and the vicinity thereof in an exploded manner.
FIG. 26 is a longitudinal sectional view schematically illustrating a twelfth example of the disposition of the quantum compass.
FIG. 27 is a longitudinal sectional view schematically illustrating a thirteenth example of the disposition of the quantum compass.
FIG. 28 is a schematic diagram for describing a fourteenth example of the disposition of the quantum compass.
FIG. 29 is a schematic cross-sectional view taken along line XIII-XIII illustrated in FIG. 28.
FIG. 30 is a side view illustrating a schematic configuration of the work vehicle.
FIG. 31 is a plan view illustrating the schematic configuration of the work vehicle.
FIG. 32 is a perspective view illustrating a schematic configuration of a cabin base portion constituting a cabin.
FIG. 33 is a side view illustrating the schematic configuration of the cabin base portion.
FIG. 34 is a side view schematically illustrating a fifteenth example of the disposition of the quantum compass.
FIG. 35 is a front view schematically illustrating the fifteenth example of the disposition of the quantum compass.
FIG. 36 is a side view schematically illustrating a sixteenth example of the disposition of the quantum compass.
FIG. 37 is a front view schematically illustrating the sixteenth example of the disposition of the quantum compass.
FIG. 38 is a front view schematically illustrating a seventeenth example of the disposition of the quantum compass.
FIG. 39 is a schematic cross-sectional view taken along line X-X illustrated in FIG. 38.
FIG. 40 is a plan view schematically illustrating an eighteenth example of the disposition of the quantum compass.
FIG. 41 is a schematic cross-sectional view taken along line XII-XII illustrated in FIG. 40.
FIG. 42 is a cross-sectional view schematically illustrating a nineteenth example of the disposition of the quantum compass.
FIG. 43 is a cross-sectional view schematically illustrating a twentieth example of the disposition of the quantum compass.
FIG. 44 is a side view illustrating a schematic configuration of a work vehicle according to another embodiment.

### DESCRIPTION OF EMBODIMENTS

Embodiments of the present invention will be described hereinafter with reference to the accompanying drawings.

A work vehicle according to an embodiment of the present invention is a tractor. However, this is merely an example. The work vehicle may be an agricultural work machine other than the tractor, including, for example, harvesters such as combine harvesters, or transplanters such as rice transplanters. The work vehicle may be a work machine other than the agricultural work machine, including work machines for civil engineering work or construction work, or snowplows.

In the present specification, directions are defined as follows. First, a direction in which the tractor as the work vehicle travels during work is defined as "front" and a direction opposite to the front is defined as "rear". Further, the right side of the traveling direction of the tractor during work is defined as right, and the left side is defined as left. A direction perpendicular to a front-rear direction and left-right direction of the tractor is defined as an up-down direction. In this case, the gravity direction is a down direction, and the direction opposite to the down direction is defined as an up direction. Further, a plane perpendicular to the up-down direction is defined as a horizontal plane and a direction along the horizontal plane is defined as a horizontal direction. The directions described above are designations used merely for explanation, and are not intended to limit the actual positional relationships and directions.

### 1. Outline of Work Vehicle

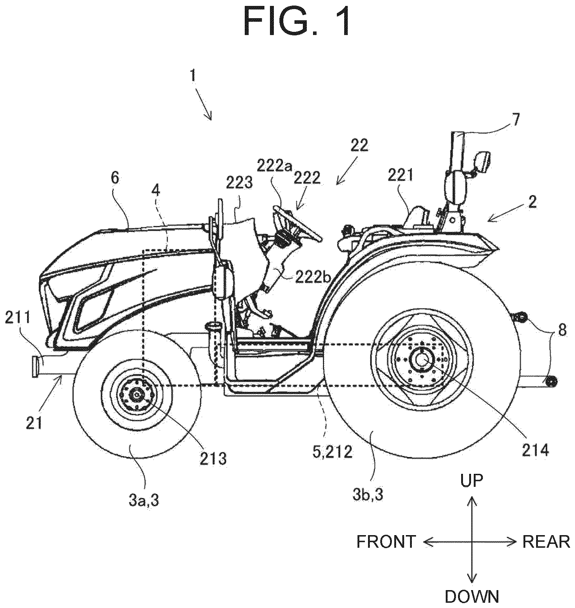

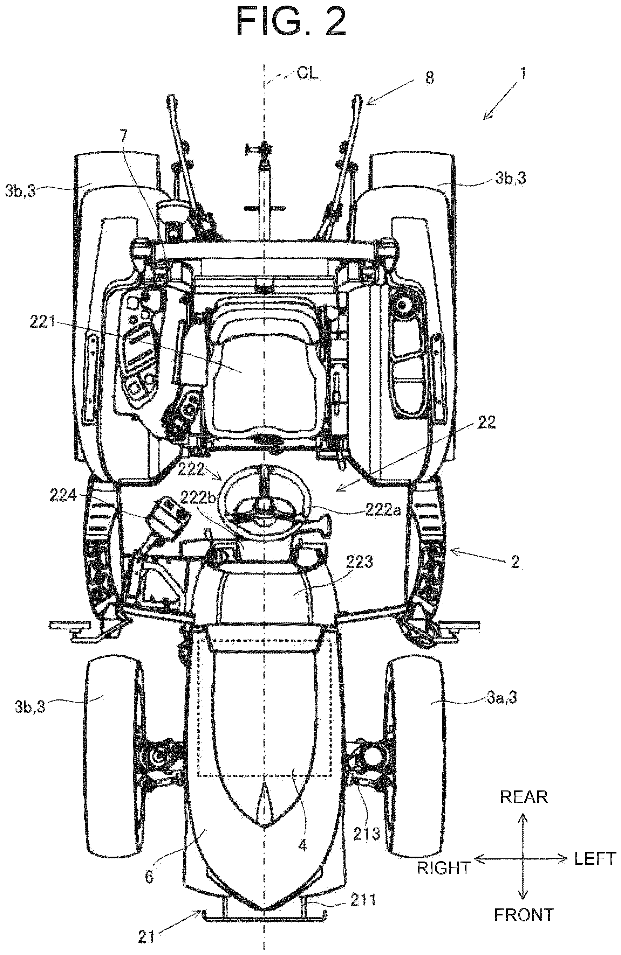

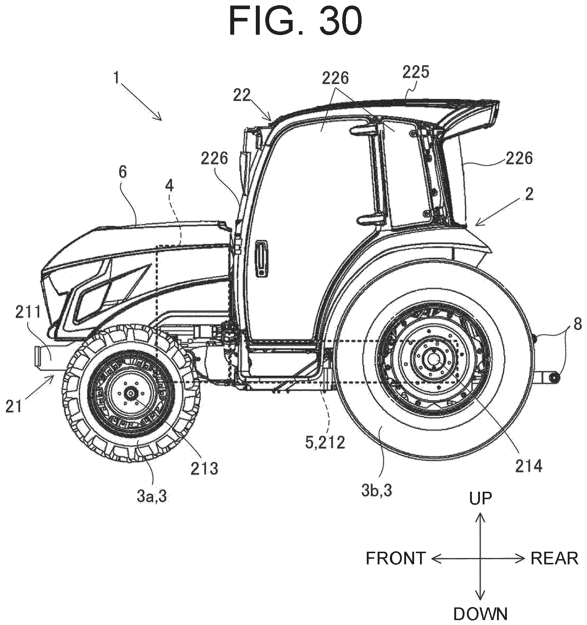

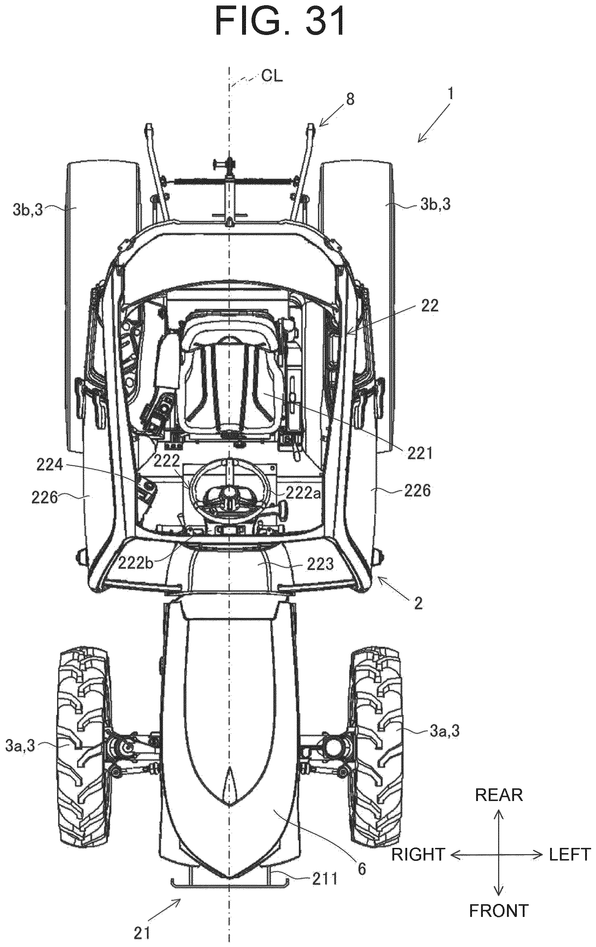

FIGS. 1 and 30 are side views illustrating a schematic configuration of a work vehicle 1 according to an embodiment of the present invention. FIGS. 2 and 31 are plan views illustrating a schematic configuration of a work vehicle 1 according to an embodiment of the present invention. As illustrated in FIGS. 1, 30, and 31, the work vehicle 1 includes a vehicle body 2, wheels 3, a prime mover 4, and a power transmission portion 5.

As illustrated in FIGS. 1, 2, 30, and 31, the wheels 3 have front wheels 3a and rear wheels 3b. The front wheels 3a are disposed on left and right sides of a front portion of the vehicle body 2. The rear wheels 3b are disposed on left and right sides of a rear part of the vehicle body 2. The vehicle body 2 is provided so as to be able to travel using the front wheels 3a and the rear wheels 3b. That is, the work vehicle 1 according to the present embodiment is a wheel-type tractor. However, the work vehicle 1 is not limited to the wheel-type tractor, but may also be a crawler-type tractor that travels using crawlers.

The prime mover 4 is disposed on the front portion of the vehicle body 2 so as to be covered by a hood 6. In the present embodiment, the prime mover 4 is an engine. The engine is, for example, a diesel engine, a gasoline engine, a hydrogen engine, a gas engine, or the like. However, the prime mover 4 may be other than the engine and may be, for example, a motor.

The power transmission portion 5 is disposed at the rear of the prime mover 4. The power transmission portion 5 transmits power of the prime mover 4 to the wheels 3. Specifically, the power of the prime mover 4 is transmitted to at least one of the front wheels 3a and the rear wheels 3b via the power transmission portion 5. In the present embodiment, the power of the prime mover 4 is transmitted to the front wheels 3a and the rear wheels 3b via the power transmission portion 5. Specifically, the power transmission portion 5 includes a transmission case 212 inside which a transmission is disposed. In addition to or instead of the transmission case 212, the power transmission portion 5 may include, for example, at least one of a power transmission shaft, a gear, a pulley, a belt, a chain, a speed reducer, and a case that accommodates such power transmission elements.

The vehicle body 2 includes a base portion 21 to which the wheels 3 are attached, and a driving compartment 22 supported by the base portion 21. That is, the work vehicle 1 includes the base portion 21 and the driving compartment 22.

Specifically, the base portion 21 includes a base frame 211, a transmission case 212 included in the power transmission portion 5, a front axle 213, and a rear axle 214. The front axle 213 includes a front wheel axle (not illustrated) to which the front wheels 3a are attached. The rear axle 214 includes a rear wheel axle (not illustrated) to which the rear wheels 3b are attached. The transmission case 212 and the front axle 213 are attached to the base frame 211. The rear axle 214 is attached to the transmission case 212. The base frame 211 supports the prime mover 4.

The driving compartment 22 is a portion of the vehicle body 2 where a driver (operator) sits, and is provided behind the prime mover 4. The driving compartment 22 is provided above the power transmission portion 5. In the present embodiment, the driving compartment 22 has an internal space (room-shaped space) in which the driver sits. That is, in the present embodiment, the driving compartment 22 is a so-called cabin, and includes a seat portion 221, a steering portion 222, and a dashboard portion 223. The work vehicle 1 includes a cabin 22, that is, the seat portion 221, the steering portion 222, and the dashboard portion 223. The cabin 22 is supported by the base portion 21.

In FIG. 31, some members such as a roof 225 (see FIG. 30) and a windshield (a type of transparent member 226) constituting the cabin 22 are removed so that the inside of the cabin 22 can be seen. As illustrated in FIG. 31, the seat portion 221, the steering portion 222, and the dashboard portion 223 are provided inside the cabin 22. That is, the work vehicle 1 includes, that is, the seat portion 221, the steering portion 222, and the dashboard portion 223.

The seat portion 221 is a place where a driver of the work vehicle 1 sits. The steering portion 222 constitutes a device for the driver sitting on the seat portion 221 to steer the work vehicle 1. Specifically, the steering portion 222 includes a steering wheel 222a and a steering column 222b. The steering wheel 222a is a portion steered by the driver, and is formed in a circular shape. The steering wheel 222a is rotatably supported by a steering shaft (not illustrated) disposed in a steering column 222b disposed below the steering wheel 222a. The orientation of the front wheels 3a can be changed by rotating the steering wheel 222a.

The dashboard portion 223 is provided in a front portion of the driving compartment 22. Specifically, at least a portion of the dashboard portion 223 is disposed in front of the steering column 222b. A meter panel (instrument panel) for visualizing values measured by various instruments including the speed of the work vehicle 1, and various levers, switches, and the like for performing operation including steering of the work vehicle 1 are disposed in the dashboard portion 223.

A lever, a pedal, and the like for steering the work vehicle 1 itself or a work machine (not illustrated) attached to the rear of the work vehicle 1 are disposed in the driving compartment 22 or otherwise in the vicinity of the seat portion 221. Further, in the driving compartment 22, an operation portion 224 used in automatic traveling of the work vehicle 1 is disposed in front of the seat section 221. The operation portion 224 enables start of automatic traveling, setting of an automatic traveling condition, and the like. Note that the automatic traveling means that at least steering is autonomously performed by controlling a device related to traveling by the control device (not illustrated). In the automatic traveling, for example, at least one of adjustment of vehicle speed and work by the work machine may be performed autonomously in addition to the steering.

Further, in the present embodiment, a roll-over protective structure (ROPS) frame 7 is provided behind the seat portion 221. The ROPS frame 7 can protect the driver when the work vehicle 1 falls over.

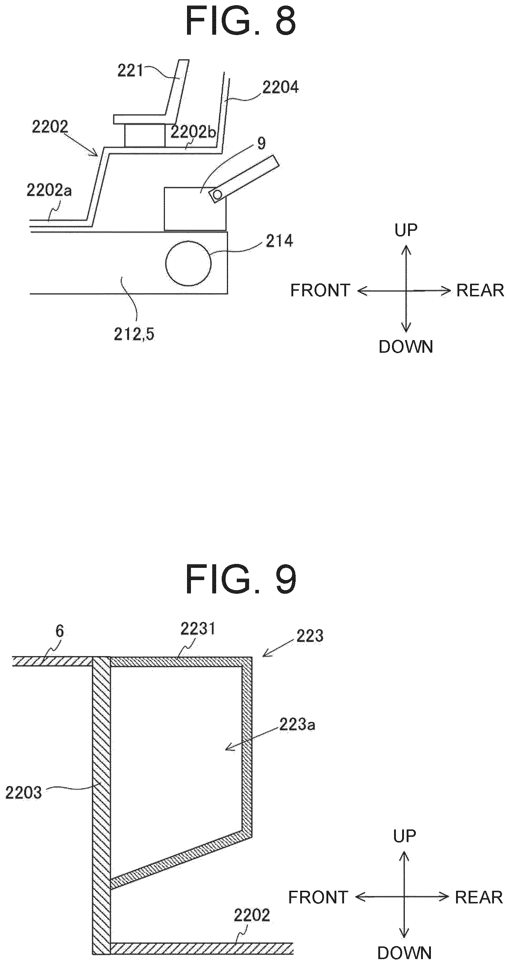

Further, a work machine coupling portion 8 configured by, for example, a three-point link mechanism, or the like is provided at the rear portion of the vehicle body 2. The work machine coupling portion 8 is provided so as to be attachable to and detachable from a work machine. The number of types of work machines that can be attached to the work machine coupling portion 8 may be only one, but is preferably two or more. The work machine includes, for example, a tilling device, a plow, a fertilizing device, an agricultural chemical spraying device, a harvesting device, or a reaping device. In addition, an elevating device 9 (see FIG. 8 described later) including a hydraulic device such as an elevating cylinder is provided at the rear portion of the vehicle body 2. The elevating device 9 can elevate and lower the work machine coupling portion 8 to elevate and lower a work machine attached to the work machine coupling portion 8. The power generated by the prime mover 4 can be transmitted to the work machine via a power take-off shaft (PTO shaft; not illustrated) extending from the power transmission portion 5 toward the rear of the vehicle body 2. That is, the work machine can be operated by the prime mover 4. The work machine may be driven by a driving device (for example, a motor) other than the prime mover 4.

### 2. Configuration of Driving Compartment

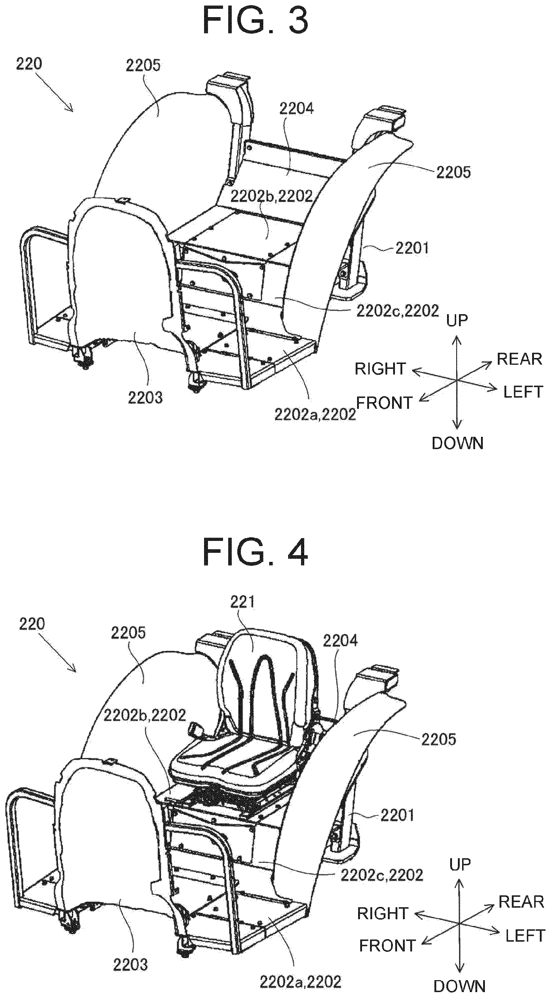

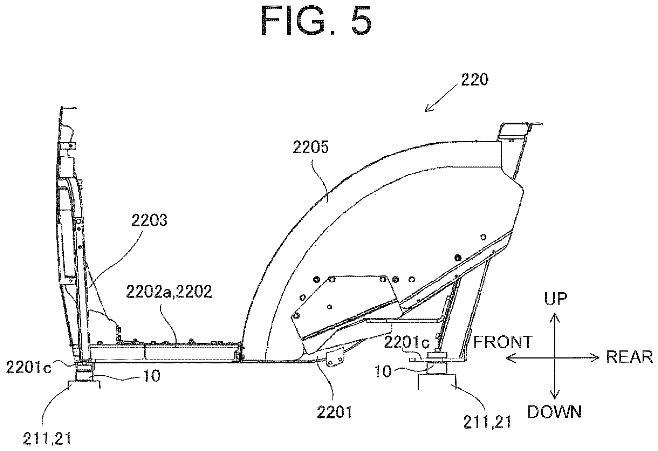

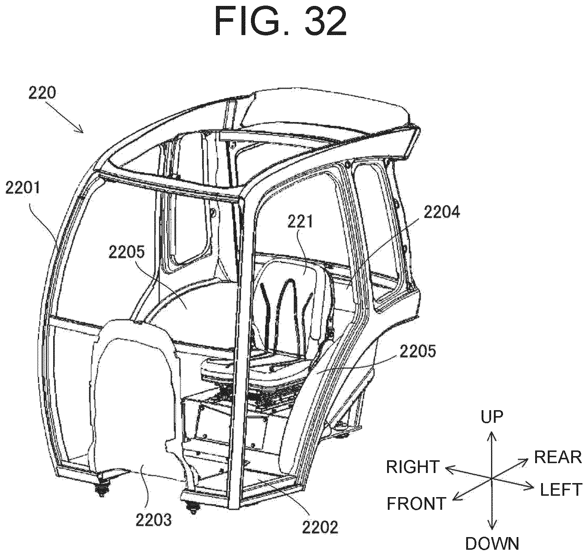

A configuration of the driving compartment 22 included in the work vehicle 1 will be described in more detail. FIGS. 3 and 32 are perspective views illustrating a schematic configuration of a driving compartment base portion 220 constituting a driving compartment 22. Note that FIG. 32 illustrates not only a cabin base portion 220 but also the seat portion 221 attached to the cabin base portion 220. FIG. 4 illustrates a state where the seat portion 221 is attached to the driving compartment base portion 220 illustrated in FIG. 3. FIG. 5 is a side view illustrating a schematic configuration of a driving compartment base portion 220 constituting a driving compartment 22.

The driving compartment base portion 220 is a portion serving as a base of the driving compartment 22. The seat portion 221, the steering portion 222, the dashboard portion 223, and the like described above are disposed on the driving compartment base portion 220. As illustrated in FIGS. 3 to 5 and 32, the driving compartment base portion 220 includes a driving compartment frame 2201, a floor 2202, a driving compartment front wall 2203, a driving compartment rear wall 2204, and left and right driving compartment side walls 2205. That is, the driving compartment 22 includes the driving compartment frame 2201, the floor 2202, the driving compartment front wall 2203, the driving compartment rear wall 2204, and the left and right driving compartment side walls 2205.

The driving compartment frame 2201 is a portion serving as a framework of the driving compartment 22. That is, the work vehicle 1 includes a driving compartment frame 2201 constituting the driving compartment 22. The driving compartment 22 includes the driving compartment frame 2201. The floor 2202, the driving compartment front wall 2203, the driving compartment rear wall 2204, and the left and right driving compartment side walls 2205 are supported by the driving compartment frame 2201. The above-described ROPS frame 7 is supported by the driving compartment frame 2201.

The floor 2202 constitutes a floor surface of the driving compartment 22. In other words, the floor 2202 constitutes a bottom wall of the driving compartment 22. The floor 2202 may be composed of a single member (a floor member), but is composed of multiple members (floor members) in the present embodiment. A floor mat may be placed on at least a part of the upper surface of the floor 2202. Specifically, the floor 2202 includes a lower floor 2202a, an upper floor 2202b, and a connecting floor 2202c that connects the lower floor 2202a and the upper floor 2202b. The lower floor 2202a and the upper floor 2202b extend horizontally. The lower floor 2202a is disposed at a lower position in the up-down direction than the upper floor 2202b. A rear-end portion of the lower floor 2202a and a front-end portion of the upper floor 2202b are connected by the connecting floor 2202c.

As illustrated in FIG. 4, the seat portion 221 is disposed on the upper floor 2202b. That is, the seat portion 221 is supported by the floor 2202. A driver sitting on the seat portion 221 drives the work vehicle 1 with his/her feet on the lower floor 2202a when driving the work vehicle 1. A floor mat may be placed on the upper surface of the lower floor 2202a.

The driving compartment front wall 2203 is erected at a central portion in the left-right direction of the front-end portion of the driving compartment 22. Specifically, the driving compartment front wall 2203 is a partition wall that prevents high-temperature air inside the hood 6 from flowing into the driving compartment 22. That is, the driving compartment front wall 2203 is a so-called air cut plate. However, the driving compartment front wall 2203 may not be the air cut plate. That is, the driving compartment front wall 2203 may be configured not to function as the air cut plate.

The driving compartment rear wall 2204 is disposed behind the seat portion 221 so as to face the rear surface of the seat portion 221. That is, the driving compartment 22 includes the driving compartment rear wall 2204 disposed behind the seat portion 221. Specifically, the driving compartment rear wall 2204 extends upward from the rear end potion of the upper floor 2202b. In the present embodiment, the driving compartment rear wall 2204 is composed of the same member as a member constituting the upper floor 2202b, but may be composed of a member other than the member of the upper floor 2202b. The left and right driving compartment side walls 2205 are disposed on the left and right of the upper floor 2202b. The left and right driving compartment side walls 2205 are disposed so as to sandwich the seat portion 221 disposed on the upper floor 2202b in the left-right direction.

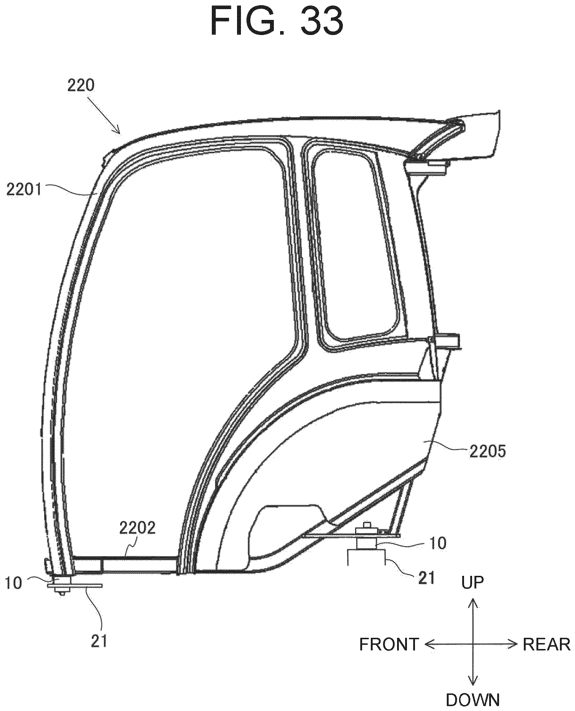

FIG. 33 is a side view illustrating a schematic configuration of the cabin base portion 220. FIG. 33 illustrates a part of a base portion 21 (see FIG. 30 and the like) that supports the cabin base portion 220. As illustrated in FIGS. 5 and 33, the driving compartment base portion 220 configured as described above is disposed on the base portion 21 via a vibration-proof member 10. That is, the base portion 21 supports the driving compartment 22 via the vibration-proof member 10. The vibration-proof member 10 is made of, for example, rubber. In the present embodiment, the vibration-proof rubber (vibration-proof member) 10 is disposed between the base frame 211 constituting the base portion 21 and the driving compartment frame 2201 supported from below by the base frame 211 (in the up-down direction). More specifically, the vibration-proof rubber 10 is disposed between the base frame 211 and a mount portion 2201c provided at the lower portion of the driving compartment frame 2201. Due to vibration-proof effect of the vibration-proof member 10, it is possible to suppress transmission of vibration (traveling vibration) generated along with traveling of the work vehicle 1 to the driving compartment 22. That is, due to the vibration-proof effect of the vibration-proof member 10, it is possible to suppress vibration of electrical components and the like disposed on the driving compartment 22 due to traveling vibration.

### 3. Configuration of Cabin

A configuration of the cabin 22 included in the work vehicle 1 will be described in more detail. FIG. 32 is a perspective view illustrating a schematic configuration of a cabin base portion 220 constituting a cabin 22. Note that FIG. 32 illustrates not only a cabin base portion 220 but also the seat portion 221 attached to the cabin base portion 220.

The cabin base portion 220 is a portion serving as a base of the cabin 22. The seat portion 221, the steering portion 222, the dashboard portion 223, and the like described above are disposed on the cabin base portion 220. As illustrated in FIG. 32, the cabin base portion 220 includes a cabin frame 2201, a floor 2202, a cabin front wall 2203, a cabin rear wall 2204, and left and right cabin side walls 2205.

The cabin frame 2201 forms a framework of the cabin 22. That is, the work vehicle 1 includes the cabin frame 2201 constituting the cabin 22. The cabin 22 includes the cabin frame 2201. The floor 2202, the cabin front wall 2203, the cabin rear wall 2204, and the left and right cabin side walls 2205 are attached to the cabin frame 2201.

The floor 2202 constitutes a floor surface of the cabin 22. In other words, the floor 2202 constitutes a bottom wall of the cabin 22. The floor 2202 may be composed of a single member (a floor member), but is composed of multiple members (floor members) in the present embodiment. The seat portion 221 is supported by the floor 2202. A floor mat may be placed on at least a part of the upper surface of the floor 2202.

The cabin front wall 2203 is erected at a central portion in the left-right direction of the front-end portion of the cabin 22. Specifically, the cabin front wall 2203 is a partition wall that prevents high-temperature air inside the hood 6 from flowing into the cabin 22. That is, the cabin front wall 2203 is a so-called air cut plate.

The cabin rear wall 2204 is disposed behind the seat portion 221 so as to face the rear surface of the seat portion 221. The cabin rear wall 2204 extends upward from the rear end potion of the floor 2202. The left and right cabin side walls 2205 are disposed on the left and right of the seat portion 221.

The upper surface, the front surface, the rear surface, and the left and right side surfaces of the cabin base portion 220 each have openings, as illustrated in FIG. 32. A roof 225 (see FIG. 30) is disposed in the opening of the upper surface. That is, the cabin 22 has the roof 225. Further, transparent members 226 (see FIG. 30) such as glass are disposed in the respective openings in the front surface, the rear surface, and the left and right side surfaces. Some of the transparent members 226 disposed on the left and right side surfaces constitute doors for the driver to enter and exit the cabin 22.

FIG. 33 is a side view illustrating a schematic configuration of the cabin base portion 220. FIG. 33 illustrates a part of a base portion 21 (see FIG. 30 and the like) that supports the cabin base portion 220. As illustrated in FIG. 33, the cabin base portion 220 is supported by the base portion 21 via the vibration-proof member 10. That is, the cabin 22 is supported by the base portion 21 via the vibration-proof member 10. The vibration-proof member 10 is made of, for example, rubber.

Specifically, the vibration-proof member 10 is disposed between the base portion 21 and the cabin base portion 220 supported from below by the base portion 21 (in the up-down direction) Due to vibration-proof effect of the vibration-proof member 10, it is possible to suppress transmission of vibration (traveling vibration) generated along with traveling of the work vehicle 1 to the cabin 22. That is, due to the vibration-proof effect of the vibration-proof member 10, it is possible to suppress vibration of electrical components and the like disposed in the cabin 22 due to traveling vibration.

### 4. Quantum Compass

### 4-1. Overview

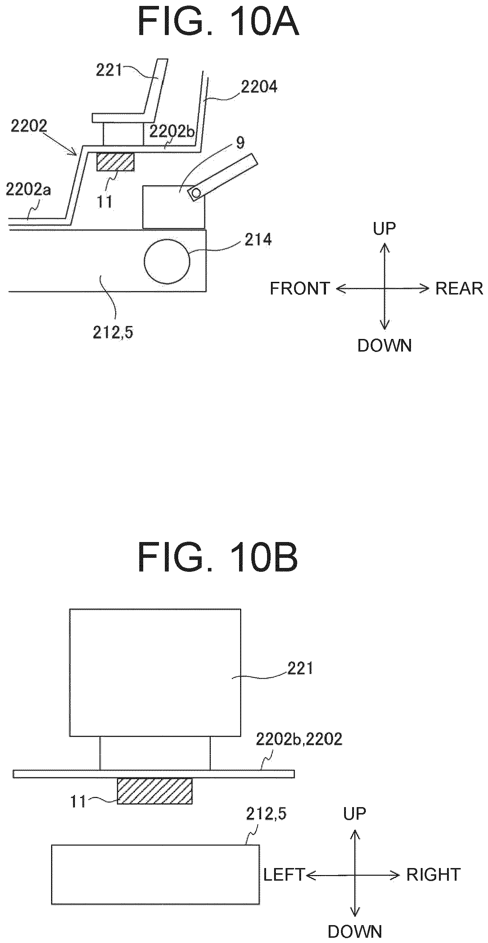

As described above, in the present embodiment, the work vehicle 1 is provided so as to be able to travel automatically. In order to enable the work vehicle 1 to travel automatically, position information of the vehicle (vehicle itself) is required. In order to be able to acquire the position information of the vehicle itself, the work vehicle 1 according to the present embodiment is provided with a quantum compass 11 (see FIG. 10A, FIG. 20, FIG. 24, FIG. 34, and the like described later). In the present embodiment, the quantum compass 11 for acquiring position information is provided in the work vehicle 1 to enable the automatic traveling, but this is merely an example. For example, the quantum compass capable of acquiring position information may be provided in the work vehicle 1 for other reasons such as recording of work information by the work vehicle 1 and theft prevention.

The quantum compass 11 is an electrically operated electrical component capable of measuring latitude and longitude. The quantum compass 11 is attached to the work vehicle 1 as an electrical component. The quantum compass 11 has no restriction on disposition related to communication as in the case where satellite information is used to acquire position information. Therefore, the quantum compass 11 does not need to be disposed on the uppermost portion of the work vehicle 1, and can also be disposed in the cabin. On the other hand, since the quantum compass 11 is an electrical component, the quantum compass 11 is preferably provided at a position where, for example, rain, mud, exhaust gas, or the like does not hit the quantum compass 11. In consideration of such a point and the like, the disposition of the quantum compass 11 is devised in the present embodiment. Details of the disposition of the quantum compass 11 will be described below with reference to a plurality of examples.

In the present embodiment, the number of the quantum compass 11 disposed on the work vehicle 1 is one. However, the number of the quantum compasses 11 disposed on the work vehicle 1 may be two or more. For example, in a configuration in which two quantum compasses 11 are disposed symmetrically in the front-rear direction or in the left-right direction, the plurality of quantum compasses 11 may be used for posture control of the work vehicle 1.

Before detailed examples of how to dispose the quantum compass 11 is described, an overview of the disposition of the quantum compass 11 will be described.

In the present embodiment, the quantum compass 11 is provided in the cabin 22. The quantum compass 11 may be disposed inside or outside the cabin 22. As described above, the cabin 22 is supported via the vibration-proof member 10 (see FIG. 33) by the base portion 21 to which the wheels 3 are attached, and has a vibration-proof structure. That is, in the present embodiment, the quantum compass 11 is disposed in the cabin 22 having the vibration-proof structure. Therefore, in the present embodiment, it is possible to suppress a decrease in the measurement accuracy of the quantum compass 11 due to the traveling vibration of the work vehicle 1.

The cabin 22 is provided in a place surrounded by the front, rear, left, and right wheels 3 (four wheels 3) in a plan view (see FIG. 31 and the like). Therefore, by providing the quantum compass 11 in the cabin 22, the quantum compass 11 can be disposed in the place surrounded by the four wheels 3 in a plan view. That is, it is possible to dispose the quantum compass 11 at a position with a small deviation with respect to a control point of the work vehicle 1 in the automatic traveling. As a result, it is possible to control the automatic traveling by reducing an error of a position measurement of the vehicle itself using the quantum compass 11. The control point in the automatic traveling is, for example, a position at the center of the four wheels 3.

As can be seen from the above description, the quantum compass 11 is preferably disposed at a position where the positional deviation with respect to the control point in the automatic traveling is small. In this sense, the quantum compass 11 is preferably disposed on a bisector (center line) CL (see FIG. 2) that bisects the work vehicle 1 in the left-right direction in a plan view. In other words, the quantum compass 11 is preferably disposed at a central portion in the left-right direction of the vehicle in a plan view. With such a configuration, it is possible to reduce the positional deviation of the quantum compass 11 with respect to the control point in the automatic traveling, and it is possible to suppress a process for obtaining the position of the vehicle itself using the quantum compass 11 from being complicated. That is, it is possible to simplify a control process of the automatic traveling.

In the present embodiment, as a preferred form, the quantum compass 11 is disposed in the vicinity of the roof 225 included in the cabin 22. When the quantum compass 11 is disposed at such a position, it is possible to make it difficult for a person to come into contact with the quantum compass 11. Specifically, it is possible to prevent an occupant of the work vehicle 1 from unexpectedly coming into contact with the quantum compass 11. When the quantum compass 11 is disposed at such a position, the quantum compass 11 is disposed at a position that is difficult to see from the outside, and thus it is possible to suppress deterioration of the designability of an interior of the cabin 22.

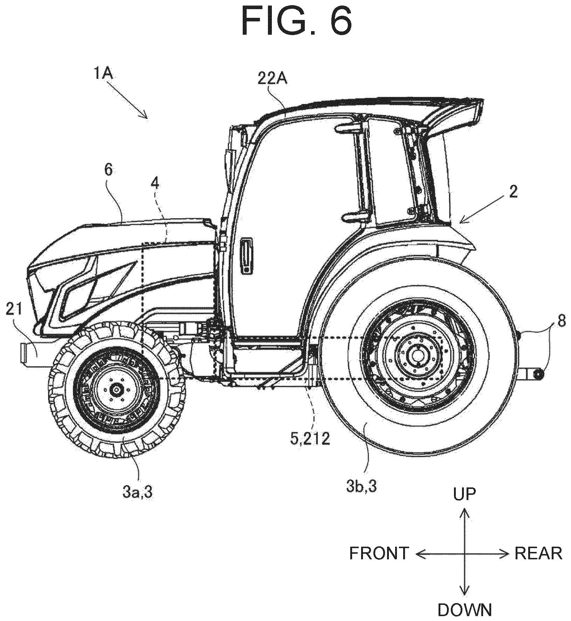

The disposition of the quantum compass 11 described below is not limited to the work vehicle 1 in which a driving space for the driver formed by the driving compartment 22 is open to the outside as in the present embodiment, and can also be applied to a work vehicle 1A having a configuration in which the driving compartment 22A is of a cabin type as illustrated in FIG. 6. FIG. 6 is a side view illustrating a schematic configuration of the work vehicle 1A according to another embodiment to which the present invention is applicable. In the cabin-type work vehicle 1A, the driving space for the driver formed by the driving compartment 22A is of a room type and is a space partitioned from the outside.

Similarly to the above-described work vehicle 1, the work vehicle 1A having the cabin-type driving compartment 22A also includes a vehicle body 2, wheels 3, a prime mover 4, and a power transmission portion 5. The vehicle body 2 includes a base portion 21 configured to include a transmission case 212 and the like, and a driving compartment (cabin) 22A supported by the base portion 21. In FIG. 6, the seat portion 221, the steering portion 222, and the dashboard portion 223 are provided in the driving compartment 22A in the same configuration as in the case of the above-described work vehicles 1, although the configuration is hidden behind an outer wall of the driving compartment 22A and cannot be seen. In addition, similarly to the above-described work vehicle 1, the driving compartment 22A is supported by the base portion 21 via the vibration-proof member 10 (see FIG. 5).

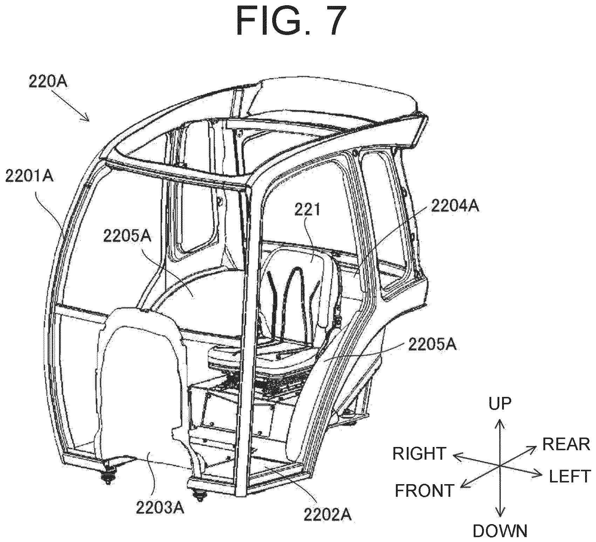

FIG. 7 is a perspective view illustrating a schematic configuration of a driving compartment base portion 220A in the cabin-type work vehicle 1A illustrated in FIG. 6. In FIG. 7, for the purpose of easy understanding, the seat portion 221 is attached to the driving compartment base portion 220A. As can be seen from a comparison between FIG. 7 and FIG. 4 described above, the driving compartment base portion 220A of the cabin-type work vehicle 1A also includes a driving compartment frame 2201A, a floor 2202A, a driving compartment front wall 2203A, a driving compartment rear wall 2204A, and left and right driving compartment side walls 2205A, as in the case of the above-described work vehicle 1.

As can be seen from the above description, the cabin-type work vehicle 1A has a configuration similar to that of the work vehicle 1 according to the present embodiment. Therefore, it should be noted first that disposition of the quantum compass 11 described below can be applied not only to the work vehicle 1 according to the present embodiment but also to the cabin-type work vehicle 1A. In the following, a description of the cabin-type work vehicle 1A will be omitted if not required.

### 5-1. Details of Disposition of Quantum Compass

FIG. 8 is a schematic view illustrating a relationship between a floor 2202 and a power transmission portion 5. In order to facilitate understanding of the relationship between the floor 2202 and the power transmission portion 5, FIG. 8 also illustrates some other components included in the work vehicle 1. Specifically, FIG. 8 illustrates a driving compartment rear wall 2204 connected to a rear-end portion of the floor 2202, and a seat portion 221 disposed on the floor 2202 (specifically, the upper floor 2202b). Further, FIG. 8 illustrates a rear axle 214 disposed on the side of a transmission case 212 constituting a power transmission portion 5, and an elevating device 9 disposed above a rear portion of the transmission case 212.

As illustrated in FIG. 8, the power transmission portion 5 is disposed below the floor 2202. The quantum compass 11 is preferably disposed below the floor 2202, detailed examples of which are disclosed in FIG. 9 and subsequent figures. The quantum compass 11 is more preferably disposed between the floor 2202 and the power transmission portion 5. Note that the configuration in which the quantum compass 11 is disposed between the floor 2202 and the power transmission portion 5 widely includes a configuration in which the quantum compass 11 is disposed between the floor 2202 and the power transmission portion 5 in a side view. Further, the configuration in which the quantum compass 11 is disposed between the floor 2202 and the power transmission portion 5 also includes a configuration in which at least a part of the quantum compass 11 is disposed between the floor 2202 and the power transmission portion 5. The power transmission portion 5 is preferably a transmission case 212.

When the quantum compass 11 is disposed between the floor 2202 and the power transmission portion 5 in the up-down direction, the quantum compass 11 can be disposed at a position where the quantum compass 11 is less likely to be exposed to rain or mud, and the quantum compass 11 that is an electronic component can be protected. In such a configuration, the quantum compass 11 can be disposed at a position in the vehicle where it is difficult for a person to come into contact with the quantum compass 11, and it is possible to prevent a person (a driver or the like) inside the driving compartment 22 from unexpectedly coming into contact with the quantum compass 11. Further, in such a configuration, the quantum compass 11 is disposed at a position that is difficult to see from the outside, and thus it is possible to suppress deterioration of the designability of an interior of the driving compartment 22. In addition, in such a configuration, the quantum compass 11 can be disposed at a position surrounded by the front, rear, left, and right wheels 3 (four wheels 3). Therefore, the quantum compass 11 can be disposed as close as possible to the control point in the automatic traveling, and the automatic traveling can be controlled by reducing the error of the position measurement of the vehicle itself using the quantum compass 11. The control point in the automatic traveling is, for example, a position at the center of the four wheels 3.

The quantum compass 11 disposed between the floor 2202 and the power transmission portion 5 is preferably disposed on a bisector (center line) CL (see FIG. 2) that bisects the work vehicle 1 in the left-right direction in a plan view. As a result, it is possible to reduce the positional deviation of the quantum compass 11 with respect to the control point in the automatic traveling, and it is possible to suppress a process for obtaining the position of the vehicle itself using the quantum compass 11 from being complicated. That is, it is possible to simplify a control process of the automatic traveling.

FIG. 9 is a longitudinal sectional view illustrating a schematic configuration of a dashboard portion 223. In addition to the dashboard portion 223, the hood 6 and the floor 2202 are also illustrated in FIG. 9 for easy understanding. As illustrated in FIG. 9, the dashboard portion 223 includes a cover member 2231 and the driving compartment front wall 2203. As described above, the driving compartment front wall 2203 is, for example, an air cut plate in the present embodiment. Therefore, hereinafter, the driving compartment front wall 2203 is referred to as an air cut plate 2203. Hereinafter, the cover member 2231 is referred to as a dash cover 2231. The dash cover 2231 may be composed of a single member or multiple members.

The air cut plate 2203 constitutes a front portion of the dashboard portion 223. The dash cover 2231 is disposed behind the air cut plate 2203. The dash cover 2231 has a box shape that is open at the front, and is disposed so as to cover at least a portion of a rear surface of the air cut plate 2203. In the example illustrated in FIG. 9, the dash cover 2231 covers a portion of the rear surface of the air cut plate 2203. A lower portion of the rear surface of the air cut plate 2203 is exposed without being covered by the dash cover 2231.

The dashboard portion 223 composed of the dash cover 2231 and the air cut plate 2203 has an internal space 223a. In the internal space 223a, for example, a meter panel, various wirings, fuses, and the like (all of which are not illustrated) are disposed. In addition, openings for exposing the meter panel, switches, and the like included in the dashboard portion 223 are appropriately provided on the rear surface of the dash cover 2231. The dash cover 2231 is detachably attached to the air cut plate 2203 so that maintenance and the like of components disposed inside the dashboard portion 223 can be easily performed.

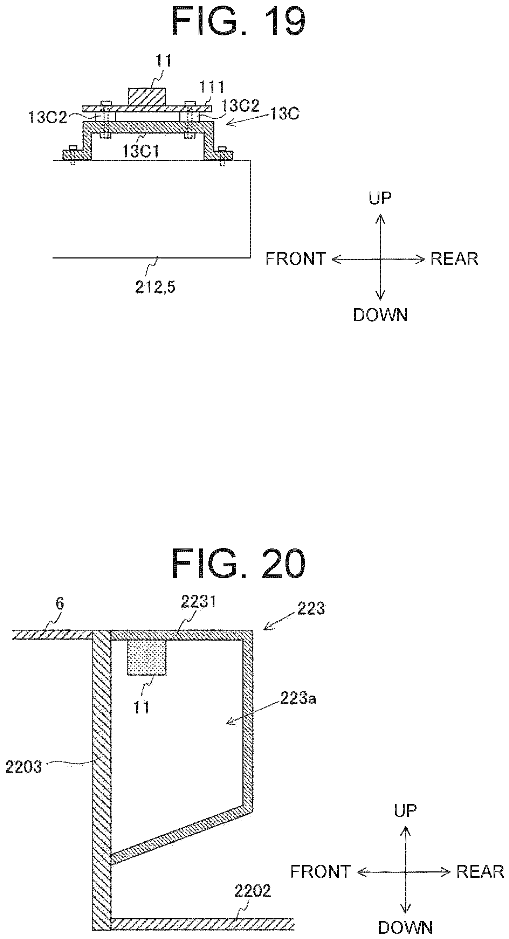

Although detailed examples will be disclosed in FIG. 20 and subsequent figures, the quantum compass 11 is provided in the dashboard portion 223. The dashboard portion 223 is included in the driving compartment 22. The driving compartment 22 is supported by the base portion 21 via the vibration-proof member 10 (see FIG. 5) as described above, and has the vibration-proof structure. That is, the quantum compass 11 disposed in the dashboard portion 223 is disposed in a portion having the vibration-proof structure of the work vehicle 1. Therefore, it is possible to suppress a decrease in the accuracy of position measurement of the quantum compass 11 due to the traveling vibration of the work vehicle 1.

The dashboard portion 223 is disposed at a position surrounded by the front, rear, left, and right wheels 3 (four wheels 3) in the work vehicle 1. Therefore, the quantum compass 11 is disposed in the dashboard portion 223, and thus the quantum compass 11 can be disposed at the position surrounded by the four wheels 3. That is, in the configuration according to the present embodiment, the quantum compass 11 can be disposed as close as possible to the control point in the automatic traveling, and the automatic traveling can be controlled by reducing the error of the position measurement of the vehicle itself using the quantum compass 11. The control point in the automatic traveling is, for example, a position at the center of the four wheels 3.

In the work vehicle 1, the dashboard portion 223 is often disposed in the central portion in the left-right direction of the vehicle body 2. Therefore, when the quantum compass 11 is disposed in the dashboard portion 223, it is possible to acquire position information of the central portion in the left-right direction of the vehicle body 2. As a result, it is possible to save efforts for correcting the position information obtained by the quantum compass 11 and eliminate error factors occurring in the correction. As can be seen from the description, the quantum compass 11 is preferably disposed on a bisector (center line) CL (see FIG. 2) that bisects the work vehicle 1 in the left-right direction in a plan view.

When the quantum compass 11 is disposed in the dashboard portion 223, it is not necessary to dispose a positioning device on an upper end portion of the work vehicle 1 as in the case of positioning using the conventional satellite information, and thus it is possible to suppress the height of the work vehicle 1.

The quantum compass 11 is preferably disposed inside the dashboard portion 223 (internal space 223a). In such a configuration, the quantum compass 11 can be disposed at a position where the quantum compass 11 is less likely to be exposed to rain or mud, and the quantum compass 11 that is an electronic component can be protected. In such a configuration, the quantum compass 11 can be disposed at a position in the vehicle where it is difficult for a person to come into contact with the quantum compass 11, and it is possible to prevent a person (a driver or the like) inside the driving compartment 22 from unexpectedly coming into contact with the quantum compass 11. Further, in such a configuration, the quantum compass 11 is disposed at a position that is difficult to see from the outside, and thus it is possible to suppress deterioration of the designability of an interior of the driving compartment 22. In addition, in such a configuration, it is possible to prevent the field of view of the driver from being blocked by the quantum compass 11.

As described above, the dash cover 2231 constituting the dashboard portion 223 is detachable. Thus, even when the quantum compass 11 is disposed inside the dashboard portion 223, maintenance of the quantum compass 11 can be easily performed by detaching the dash cover 2231.

The quantum compass 11 provided in the dashboard portion 223 may be disposed not inside the dashboard portion 223 but outside the dashboard portion 223. In such a configuration, the quantum compass 11 can be protected from rainwater, dust, and the like by providing a protective cover that covers the quantum compass 11. The protective cover is preferably a waterproof cover provided with a waterproof measure. When the quantum compass 11 is provided in the dashboard portion 223 of the the cabin-type work machine 1A as illustrated in FIG. 6, the protective cover is not necessarily required because the quantum compass 11 is not exposed to rainwater or the like even if the quantum compass 11 is disposed outside the dashboard portion 223.

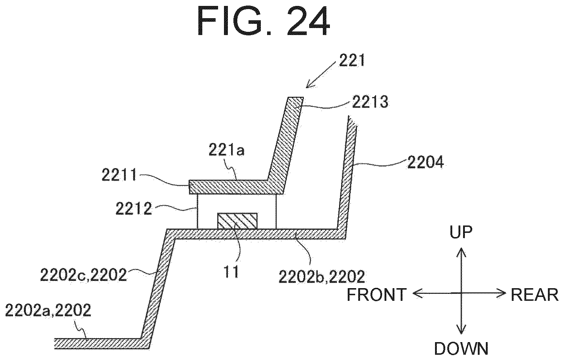

Although detailed examples will be disclosed in FIG. 24 and the subsequent figures, in the present embodiment, the quantum compass 11 is provided in the seat portion 221 or the vicinity thereof. Note that the vicinity of the seat portion 221 is the vicinity of the seat portion 221 in the driving compartment 22. That is, the quantum compass 11 disposed in the seat portion 221 or the vicinity thereof is disposed in the driving compartment 22.

As described above, the driving compartment 22 is supported by the base portion 21 via the vibration-proof member 10 (see FIG. 5), and has the vibration-proof structure. That is, the quantum compass 11 disposed in the seat portion 221 or the vicinity thereof is disposed in a portion having the vibration-proof structure of the work vehicle 1. Therefore, it is possible to suppress a decrease in the accuracy of position measurement of the quantum compass 11 due to the traveling vibration of the work vehicle 1.

The seat portion 221 and the periphery thereof correspond to a position surrounded by the front, rear, left, and right wheels 3 (four wheels 3) in the work vehicle 1. Therefore, the quantum compass 11 is disposed in the seat portion 221 or the vicinity thereof, and thus the quantum compass 11 can be disposed at the position surrounded by the four wheels 3. That is, in the configuration according to the present embodiment, the quantum compass 11 can be disposed as close as possible to the control point in the automatic traveling, and the automatic traveling can be controlled by reducing the error of the position measurement of the vehicle itself using the quantum compass 11. The control point in the automatic traveling is, for example, a position at the center of the four wheels 3.

When the vehicle in which the quantum compass 11 is provided is the cabin-type work vehicle 1A illustrated in FIG. 6, the seat portion 221 or the periphery thereof can be inside the cabin. Therefore, in the cabin-type work vehicle 1A, the quantum compass 11 is disposed in the seat portion 221 or the periphery thereof, and thus the quantum compass 11 that is an elactronic component is an electronic part, can be protected from rain, mud, exhaust gas, or the like.

On the other hand, in the work vehicle 1 according to the present embodiment, the quantum compass 11 provided in the seat portion 221 or the vicinity thereof may be disposed at a position exposed to the outside of the work vehicle 1 which is exposed to rainwater or the like. When the quantum compass 11 is exposed to the outside as described above, it is preferable to provide a protective cover for covering the quantum compass 11 to protect the quantum compass 11 from rainwater or the like. The protective cover is preferably a waterproof cover provided with a waterproof measure.

The quantum compass 11 provided in the seat portion 221 or the vicinity thereof is preferably disposed at a position where the quantum compass 11 does not impair the visibility of the driver and stays out of the driver's line of sight. The quantum compass 11 provided in the seat portion 221 or the vicinity thereof is preferably disposed at a position where the quantum compass 11 does not obstruct the driver and does not deteriorate the designability of the driving compartment 22.

The quantum compass 11 provided in the seat portion 221 or in the vicinity thereof is preferably disposed on a bisector (center line) CL (see FIG. 2) that bisects the work vehicle 1 in the left-right direction in a plan view. As a result, it is possible to reduce the positional deviation of the quantum compass 11 with respect to the control point in the automatic traveling, and it is possible to prevent a process for obtaining the position of the vehicle itself using the quantum compass 11 from being complicated. That is, it is possible to simplify a control process of the automatic traveling.

The vicinity of the seat portion 221 is preferably located above the floor 2202. That is, the quantum compass 11 provided in the vicinity of the seat portion 221 is preferably provided above the floor 2202. Since the quantum compass 11 is provided above the floor 2202, maintainability of the quantum compass 11 can be improved. However, the quantum compass 11 provided in the vicinity of the seat portion 221 may be provided in the driving compartment 22, and may be disposed below the floor 2202.

Hereinafter, a method of disposing the quantum compass 11 including the disposition configuration of the quantum compass 11 disposed between the floor 2202 and the power transmission portion 5 will be described with reference to a plurality of examples.

### 5-2-1. First Example

FIG. 10A is a side view schematically illustrating a first example of the disposition of the quantum compass 11. FIG. 10B is a rear view schematically illustrating the first example of the disposition of the quantum compass 11. Note that in FIG. 10B, the elavating device 9 and the rear axle 214 illustrated in FIG. 10A are omitted.

As illustrated in FIGS. 10A and 10B, in the first example, the quantum compass 11 is supported by the floor 2202. Specifically, the quantum compass 11 is attached to a lower surface of the floor 2202. More specifically, the quantum compass 11 is attached to the lower surface of the upper floor 2202b on which the seat portion 221 is disposed. A method for attaching the quantum compass 11 to the floor 2202 may use, but not limited to, fixing tools such as bolts, adhesive, or the like.

The floor 2202 is included in the driving compartment 22. The driving compartment 22 is supported by the base portion 21 via the vibration-proof member 10 (see FIG. 5) as described above, and has the vibration-proof structure. This means that the floor 22 also has the vibration-proof structure. That is, in the configuration according to the first example, the quantum compass 11 is supported by the floor 2202 having the vibration-proof structure. Therefore, in the configuration according to the first example, it is possible to suppress a decrease in the accuracy of position measurement of the quantum compass 11 due to the traveling vibration of the work vehicle 1.

In the configuration according to the first example, the quantum compass 11 is preferably disposed at the center of the upper floor 2202b in the left-right direction. Therefore, the quantum compass 11 can be disposed on a center line CL (see FIG. 2) that bisects the work vehicle 1 in the left-right direction in a plan view. As a result, it is possible to reduce the positional deviation of the quantum compass 11 with respect to the control point in the automatic traveling and to simplify the control process.

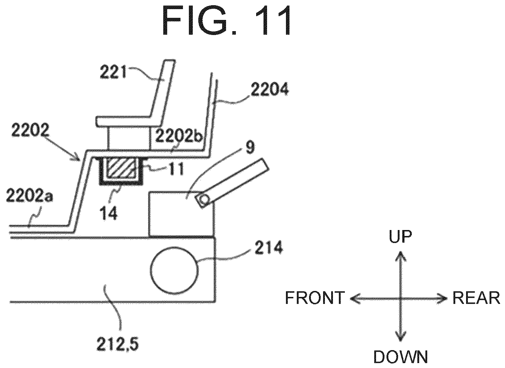

As illustrated in FIG. 11 illustrating a variation of the first example, the quantum compass 11 attached to the floor 2202 may be covered with a cover member 14 made of, for example, sheet metal or resin. That is, the work vehicle 1 may be configured to include the cover member 14 that covers the quantum compass 11. As a result, the functionality of protecting the quantum compass 11 from mud and water can be enhanced. The cover member 14 is preferably provided so as to be attachable to and detachable from the floor 2202.

### 5-2-2. Second Example

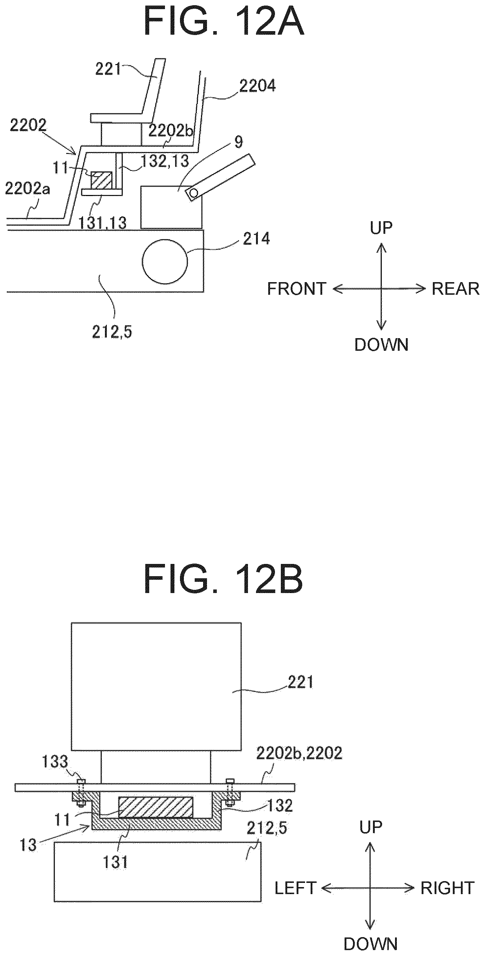

FIG. 12A is a side view schematically illustrating a second example of the disposition of the quantum compass 11. FIG. 12B is a rear view schematically illustrating the second example of the disposition of the quantum compass 11. Note that in FIG. 12B, the elevating device 9 and the rear axles 214 illustrated in FIG. 12A are omitted.

As illustrated in FIGS. 12A and 12B, in the second example, the quantum compass 11 is also supported by the floor 2202 as in the first example. However, in the second example, the quantum compass 11 is supported by the floor 2202 via a support member 13. The quantum compass 11 is supported by the floor 2202 in a state of being attached to the support member 13.

When the quantum compass 11 is not directly attached to the floor 2202 but indirectly attached to the floor 2202 via the support member 13, the degree of freedom of disposition of the quantum compass 11 with respect to the floor 2202 can be increased. Further, the support strength of the quantum compass 11 can be improved.

In the second example, the support member 13 includes a flat plate portion 131 to which the quantum compass 11 is attached, and left and right arm portions 132 for attaching the flat plate portion 131 to the floor 2202. Note that a method for attaching the quantum compass 11 to the flat plate portion 131 may use fixing tools such as bolts, adhesive, or the like. The flat plate portion 131 extends horizontally. The left and right arm portions 132 extend upward from the flat plate portion 131, and are attached to the floor 2202 using bolts 133. However, the shape of the support member 13 may be different from such a configuration, and may be a simple flat plate or the like. Further, the support member 13 may be integrated with the floor 2202 by welding or the like, instead of being attached to the floor 2202 using fixing tools.

Even in this example, the quantum compass 11 may be covered with a cover member. In this case, the cover member is preferably provided so as to be attachable to and detachable from the support member 13. The quantum compass 11 is preferably disposed at the center of the upper floor 2202b in the left-right direction in a plan view.

### 5-2-3. Third Example

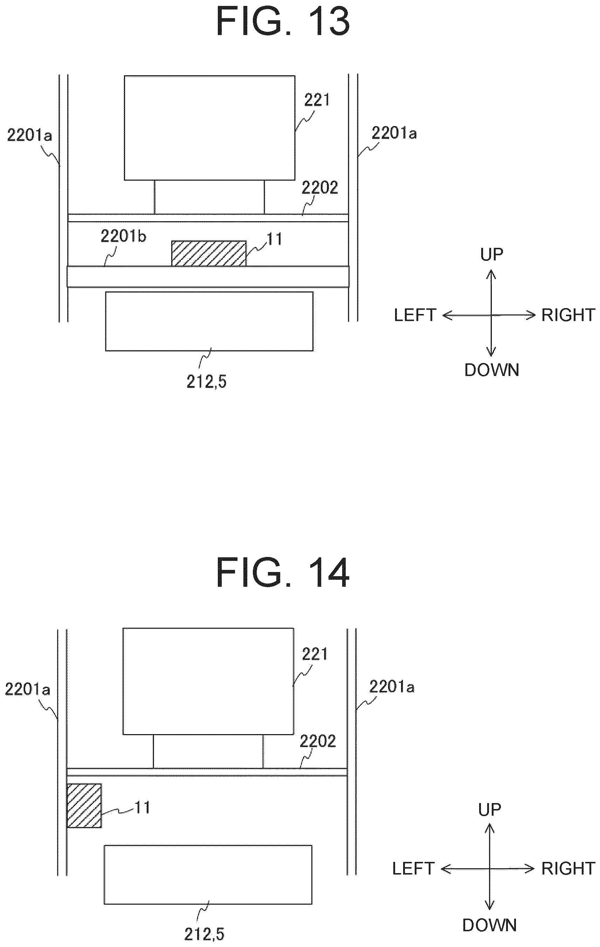

FIG. 13 is a rear view schematically illustrating a third example of the disposition of the quantum compass 11. As illustrated in FIG. 13, in the third example, the quantum compass 11 is supported by the driving compartment frame 2201 constituting the driving compartment 22. As described above, the driving compartment frame 2201 is a frame that supports the floor 2202. Even in such a configuration, the quantum compass 11 can be disposed at an appropriate position between the floor 2202 and the power transmission portion 5, for example, the quantum compass 11 can be disposed at a position avoiding rain or mud.

Further, since the driving compartment 22 has the vibration-proof structure as described above, the driving compartment frame 2201 also has the vibration-proof structure. That is, in the configuration according to the third example, the quantum compass 11 is supported by the driving compartment frame 2201 having the vibration-proof structure. Therefore, in the configuration according to the third example, it is possible to suppress a decrease in the accuracy of the position measurement of the quantum compass 11 due to the traveling vibration of the work vehicle 1.

In the example illustrated in FIG. 13, specifically, the quantum compass 11 is supported by a driving compartment bridge frame 2201b that bridges left and right driving compartment side frames 2201a extending in the up-down direction. The quantum compass 11 is preferably disposed at a central portion in the left-right direction of the driving compartment bridge frame 2201b. Therefore, the quantum compass 11 can be disposed on a center line CL (see FIG. 2) that bisects the work vehicle 1 in the left-right direction in a plan view. A method for attaching the quantum compass 11 to the driving compartment bridge frame 2201b may use, for example, fixing tools such as bolts, adhesive, or the like.

FIG. 14 illustrates a first variation of the third example of the disposition of the quantum compass. As illustrated in FIG. 14, the quantum compass 11 supported by the driving compartment frame 2201 may be disposed on either one of the left and right driving compartment side frames 2201a. In the example illustrated in FIG. 14, the quantum compass 11 is disposed on the left driving compartment side frame 2201a.

When the quantum compass 11 is disposed on either one of the left and right driving compartment side frames 2201a, the quantum compass 11 is disposed at a position deviated from the center line CL (see FIG. 2) that bisects the work vehicle 1 in the left-right direction in a plan view. Therefore, for example, when the control point in the automatic traveling is located on the center line CL that bisects the work vehicle 1 in the left-right direction in a plan view, it is necessary to correct a position measured by the quantum compass 11 by the amount of positional deviation in the left-right direction (the amount of positional deviation with respect to the center line CL) to obtain a position of the vehicle itself.

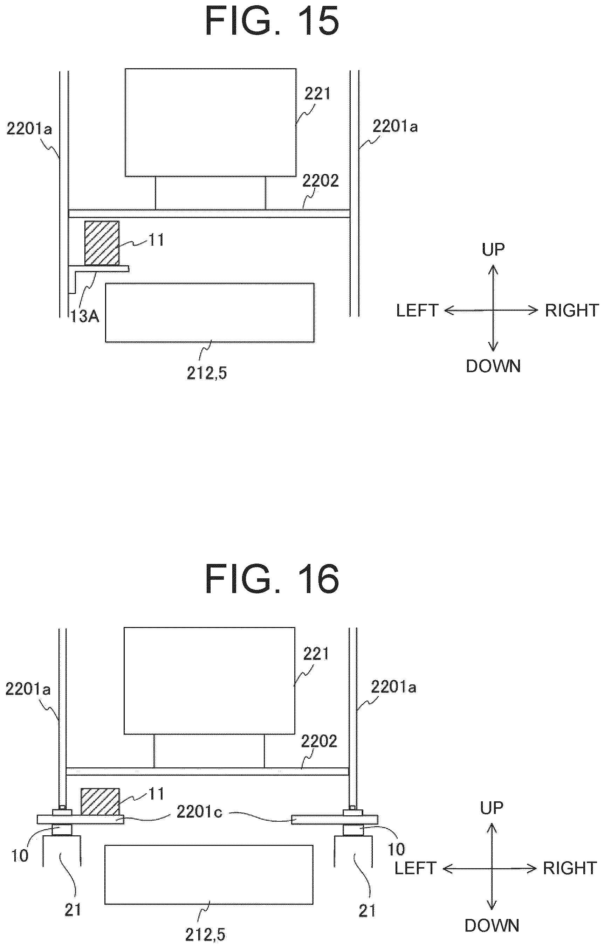

FIG. 15 illustrates a second variation of the third example of the disposition of the quantum compass. As illustrated in FIG. 15, the quantum compass 11 may be supported by either one of the left and right driving compartment side frames 2201a via the support member 13A. That is, the quantum compass 11 may be configured to be supported by the driving compartment frame 2201 via the support member 13A. In this way, when the quantum compass 11 is indirectly attached to the driving compartment frame 2201 via the support member 13A, the degree of freedom of disposition of the quantum compass 11 with respect to the driving compartment frame 2201 can be increased. Further, the support strength of the quantum compass 11 can be improved. A method for attaching the quantum compass 11 to the support member 13A may use, for example, fixing tools such as bolts, adhesive, or the like.

Note that even in the configuration according to the third example illustrated in FIG. 13, the quantum compass 11 may be supported by the driving compartment bridge frame 2201b via the support member. Further, even in the configurations according to the third example and variations thereof (the first variation and the second variation), the quantum compass 11 may be covered with a cover member. The cover member is preferably attachable to and detachable from the driving compartment frame 2201 and the support member 13A.

### 5-2-4. Fourth Example

FIG. 16 is a rear view schematically illustrating a fourth example of the disposition of the quantum compass 11. As illustrated in FIG. 16, in the fourth example, the quantum compass 11 is supported by a mount portion 2201c included in the driving compartment 22. The mount portion 2201c corresponds to a portion (attachment portion) of the driving compartment 22 to be attached to the base portion 21 via the vibration-proof member 10.

Even in the fourth example, the quantum compass 11 can be disposed at an appropriate position between the floor 2202 and the power transmission portion 5. Further, since the driving compartment 22 has the vibration-proof structure as described above, the mount portion 2201c also has the vibration-proof structure. That is, in the configuration according to the fourth example, the quantum compass 11 is supported by the mount portion 2201c having the vibration-proof structure. Therefore, in the configuration according to the fourth example, it is possible to suppress a decrease in the accuracy of the position measurement of the quantum compass 11 due to the traveling vibration of the work vehicle 1.

A method for attaching the quantum compass 11 to the mount portion 2201c may use, for example, fixing tools such as bolts, adhesive, or the like. Further, even in the fourth example, the quantum compass 11 may be covered with a cover member. The cover member is preferably attachable to and detachable from the mount portion 2201c.

### 5-2-5. Fifth Example

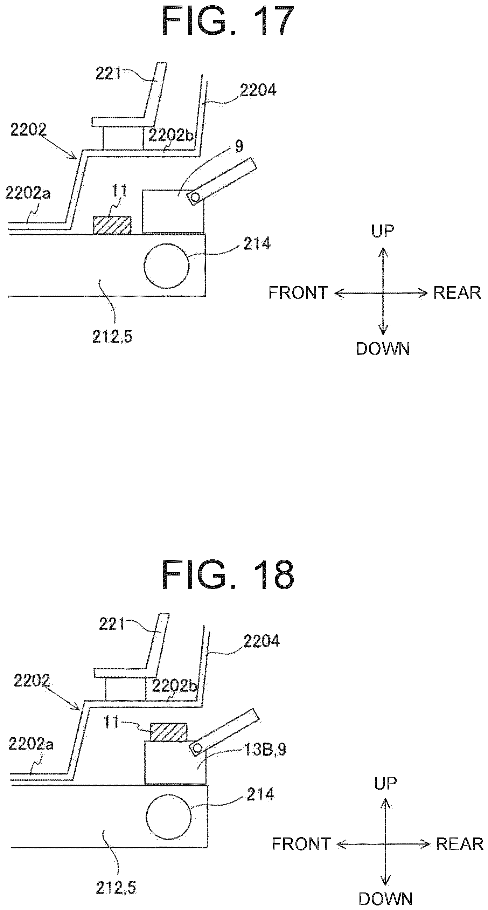

FIG. 17 is a side view schematically illustrating a fifth example of the disposition of the quantum compass 11. As illustrated in FIG. 17, in the fifth example, the quantum compass 11 is supported by the power transmission portion 5. Specifically, the quantum compass 11 is attached to an upper surface of the transmission case 212. In such a configuration, the quantum compass 11 can be disposed at a lower position of the work vehicle 1, and thus an error in positional accuracy that occurs when the work vehicle 1 is inclined can be reduced. That is, the automatic traveling can be appropriately controlled.

A method for attaching the quantum compass 11 to the transmission case 212 may use, for example, fixing tools such as bolts, adhesive, or the like. In addition, the quantum compass 11 supported by the power transmission portion 5 is preferably disposed on a center line CL (see FIG. 2) that bisects the work vehicle 1 in the left-right direction in a plan view. Thus, it is possible to reduce the positional deviation of the quantum compass 11 with respect to the control point in the automatic traveling and to simplify the control process.

Further, as illustrated in FIG. 18, the quantum compass 11 is preferably supported by the power transmission portion 5 via a support member 13B. By interposing the support member 13B in this way, the degree of freedom of disposition of the quantum compass 11 with respect to the power transmission portion 5 can be increased. Further, the support strength of the quantum compass 11 can be improved. Note that FIG. 18 illustrates a variation of the fifth example of the disposition of the quantum compass 11. A method for attaching the quantum compass 11 to the support member 13B may use, for example, fixing tools such as bolts, adhesive, or the like.

The example illustrated in FIG. 18 illustrates a case where the support member 13B is the elevating device 9. That is, in the example illustrated in FIG. 18, an existing component is used as the support member 13B. However, the support member 13B may be a member provided to support the quantum compass 11 instead of using an existing component. The member (support member) provided exclusively for supporting the quantum compass 11 may have any shape such as a flat plate, and may be attached to the transmission case 212 by welding or using fixing tools.

### 5-2-6. Sixth Example

FIG. 19 is a side view schematically illustrating a sixth example of the disposition of the quantum compass 11. In the sixth example, the quantum compass 11 is supported by the power transmission portion 5 (specifically, the transmission case 212) via a support member 13C, as in the configuration described above as the variation of the fifth example. However, the sixth example is different from the fifth example as described above in that the support member 13C has a vibration-proof member 13C2. In such a configuration, the vibration-proof member 13C2 is interposed between the quantum compass 11 and the power transmission portion 5, and thus it is possible to suppress transmission of vibration of the power transmission portion 5 to the quantum compass 11. That is, it is possible to suppress a decrease in the accuracy of position measurement of the quantum compass 11.

In the example illustrated in FIG. 19, the quantum compass 11 includes an attachment portion 111. When the attachment portion 111 is attached to the transmission case 212 via the support member 13C, the quantum compass 11 is supported by the transmission case 212. The support member 13C includes a frame portion 13C1 that is attached to an upper surface of the transmission case 212 using fixing tools (bolts or the like), and a vibration-proof member 13C2 that is disposed on an upper surface of the frame portion C1. The vibration-proof member 13C2 is specifically a vibration-proof rubber. In the example illustrated in FIG. 19, the number of the vibration-proof members is two, but this number may be changed to one or three or more. The vibration-proof rubber 13C2 disposed between the attachment portion 111 and the frame portion 13C1 in the up-down direction can suppress transmission of vibration from the transmission case 212 to the quantum compass 11.

Next, the disposition configuration of the quantum compass 11 provided in the dashboard portion 223 will be described with reference to specific examples.

### 5-2-7. Seventh Example

FIG. 20 schematically illustrates a seventh example of the disposition of the quantum compass 11. FIG. 20 is a longitudinal sectional view similar to FIG. 9.

In the seventh example illustrated in FIG. 20, the quantum compass 11 is supported by the dash cover (cover member) 2231. A configuration in which the quantum compass 11 is supported by the dash cover 2231 can eliminate the need to newly provide a support structure for supporting the quantum compass 11. Accordingly, the manufacturing cost of the work vehicle 1 can be kept lower.

Specifically, the quantum compass 11 is attached to the inner surface of the dash cover 2231. In the example illustrated in FIG. 20, the quantum compass 11 is disposed in an upper portion of the internal space 223a, but the position may be changed as appropriate. In other words, the quantum compass 11 may be attached to an inner surface of a front portion, an inner surface of a lower portion, or the like instead of an inner surface of an upper portion of the dash cover 2231. A method for attaching the quantum compass 11 to the dash cover 2231 may use, but not limited to, fixing tools such as bolts, adhesive, or the like.

The quantum compass 11 may be attached to an outer surface of the dash cover 2231. In this case, a protective cover that covers the quantum compass 11 may be provided as appropriate. The protective cover may be attached to the dash cover 2231.

### 5-2-8. Eighth Example

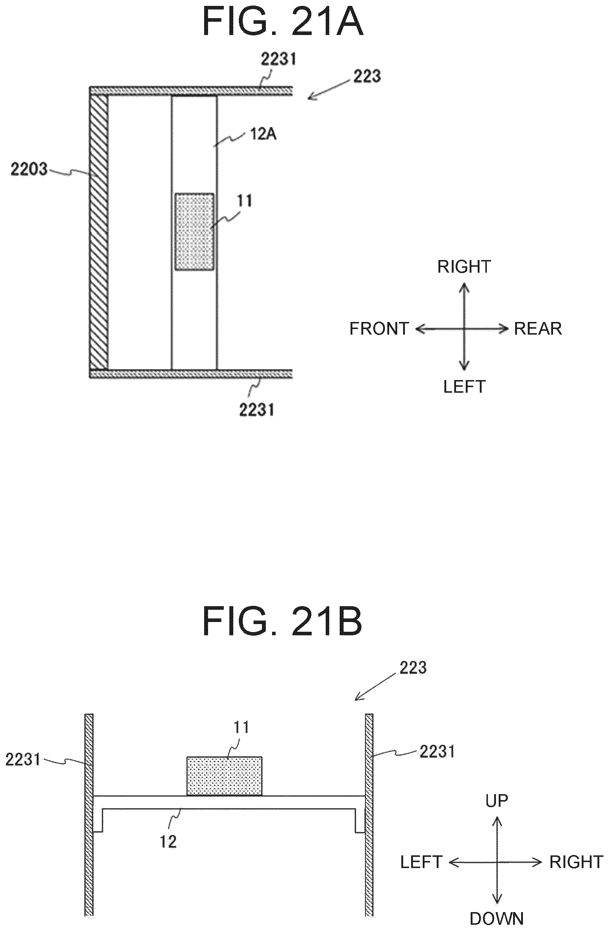

FIG. 21A is a cross-sectional view schematically illustrating an eighth example of the disposition of the quantum compass 11. FIG. 21B is a longitudinal sectional view schematically illustrating an eighth example of the disposition of the quantum compass 11.

As illustrated in FIGS. 21A and 21B, in the eighth example, the quantum compass 11 is supported by the dash cover (cover member) 2231 via a support member 12A. When the quantum compass 11 is not directly attached to the dash cover 2231 but indirectly attached to the dash cover 2231 via the support member 12A, the degree of freedom of disposition of the quantum compass 11 with respect to the dash cover 2231 can be increased. Further, the support strength of the quantum compass 11 can be improved.

In the eighth example, the support member 12A has a beam-shaped structure extending in the left-right direction in the internal space 223a (see FIG. 9). A left end portion of the support member 12A is attached to a left side wall of the dash cover 2231. A right end portion of the support member 12A is attached to a right side wall of the dash cover 2231. A method for attaching the support member 12A to the dash cover 2231 may use, but not limited to, fixing tools such as bolts, adhesive, or the like.

The quantum compass 11 is attached to an upper surface of the support member 12A. A method for attaching the quantum compass 11 to the support member 12A may use, but not limited to, fixing tools such as bolts, adhesive, or the like. In the examples illustrated in FIGS. 21A and 21B, the quantum compass 11 is attached to the upper surface of the support member 12A, but may be attached to a lower surface of the support member 12A. The support member 12A may not have a beam-shaped structure, and the configuration thereof may be changed as appropriate. The support member 12A may be, for example, a plate-shaped or arch-shaped member disposed between wall surfaces constituting the dash cover 2231 and the quantum compass 11.

The quantum compass 11 supported by the dash cover 2231 via a support member may also be disposed on the outer surface of the dash cover 2231.

### 5-2-9. Ninth Example

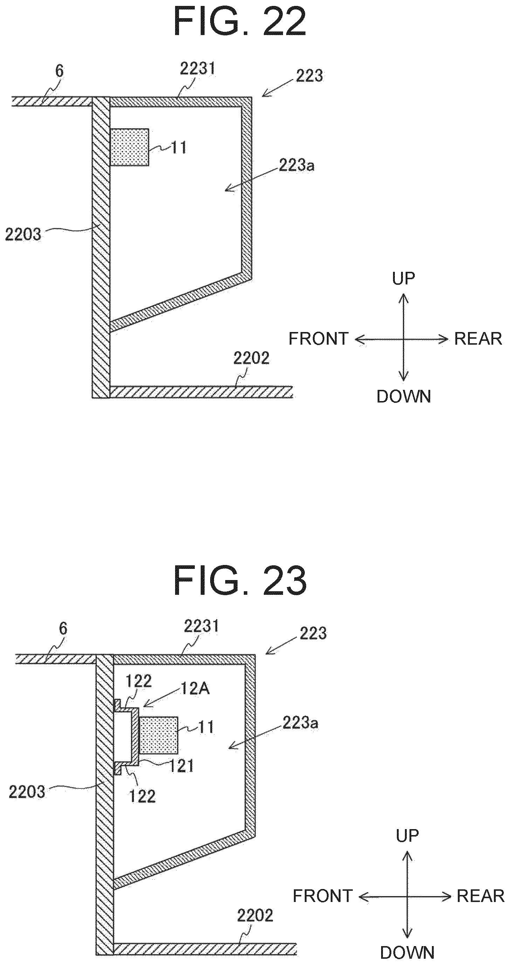

FIG. 22 schematically illustrates a ninth example of the disposition of the quantum compass 11. FIG. 22 is a longitudinal sectional view similar to FIG. 9.

In the ninth example illustrated in FIG. 22, the quantum compass 11 is supported by the air cut plate 2203. A configuration in which the quantum compass 11 is supported by the air cut plate 2203 can eliminate the need to newly provide a support structure for supporting the quantum compass 11. Accordingly, the manufacturing cost of the work vehicle 1 can be kept lower.

Specifically, the quantum compass 11 is attached to the rear surface of the air-cut plate 2203. A method for attaching the quantum compass 11 to the air cut plate 2203 may use, but not limited to, fixing tools such as bolts, adhesive, or the like. In the ninth example illustrated in FIG. 22, the quantum compass 11 is disposed on an upper portion of the rear surface of the air cut plate 2203. However, the attachment position of the quantum compass 11 to the rear surface of the air cut plate 2203 may be changed as appropriate.

In this example, the quantum compass 11 is disposed inside the dashboard portion 223 (the internal space 223a) by being disposed on the upper portion of the rear surface of the air cut plate 2203. However, the quantum compass 11 may be disposed on the lower portion of the rear surface of the air cut plate 2203 and may be disposed outside the dashboard portion 223 instead of inside the dashboard portion 223. When the quantum compass 11 is disposed outside the dashboard portion 223, a protective cover may be provided as appropriate.

### 5-2-10. Tenth Example

FIG. 23 schematically illustrates a tenth example of the disposition of the quantum compass 11. FIG. 23 is a longitudinal sectional view similar to FIG. 9.

As illustrated in FIG. 23, in the tenth example, the quantum compass 11 is supported by the air cut plate 2203 via the support member 12A. When the quantum compass 11 is not directly attached to the air cut plate 2203 but indirectly attached to the air cut plate 2203 via the support member 12A, the degree of freedom of disposition of the quantum compass 11 with respect to the air cut plate 2203 can be increased. Further, the support strength of the quantum compass 11 can be improved.

In the tenth example, the support member 12A has an arch shape including a flat plate portion 121 that extends in the vertical direction and to which the quantum compass 11 is attached, and upper and lower leg portions 122 that attach the flat plate portion 121 to the air cut plate 2203. A method for attaching the quantum compass 11 to the flat plate portion 121 may use fixing tools such as bolts, adhesive, or the like. The leg portions 122 extend forward from the flat plate portion 121 and are attached to the air cut plate 2203 using fixing tools (not illustrated) such as bolts.

However, the shape of the support member 12A may be different from such a configuration, and may be a simple flat plate or the like. Further, the support member 13 may be integrated with the air cut plate 2203 by welding or the like, instead of being attached to the air cut plate 2203 using fixing tools.

Hereinafter, the disposition configuration of the quantum compass 11 disposed in the seat portion 221 or the vicinity thereof will be described with reference to specific examples.

### 5-2-11. Eleventh Example

FIG. 24 is a longitudinal sectional view schematically illustrating an eleventh example of the disposition of the quantum compass 11. As illustrated in FIG. 24, the seat portion 221 includes a seat 2211 having a seat surface 221a, and a seat support portion 2212 that supports the seat 2211. In this example, the seat support portion 2212 is supported by the floor 2202 (upper floor 2202b). The seat portion 221 further includes a backrest portion 2213.

The seat surface 221a is a portion on which the driver places his/her hip. The seat support portion 2212 may be simply a cylindrical base that supports the seat 2211, but may have another configuration. For example, the seat support portion 2212 may include an adjustment mechanism that adjusts the position of the seat 2211, and outer peripheral walls that surround the adjustment mechanism. The adjustment mechanism may be a mechanism capable of adjusting at least one of the up-down direction and the front-rear direction of the seat 2211. When the adjustment mechanism is configured to be capable of adjusting the position of the seat 2211 in the up-down direction, the outer peripheral walls are preferably made of an elastic member such as a rubber member that can expand or contract in the up-down direction. The backrest portion 2213 is a portion that serves as a backrest for the driver sitting on the seat 2211.

In the eleventh example, as illustrated in FIG. 24, the quantum compass 11 is disposed between the seat surface 221a of the seat portion 221 and the floor 2202. In other words, the quantum compass 11 is disposed between the seat surface 221a and the upper surface of the floor 2202 in the up-down direction.

When the quantum compass 11 is disposed between the seat surface 221a and the floor 2202, the quantum compass 11 can be disposed at a position where the quantum compass 11 stays out of the driver's field of view. Further, in such a configuration, the quantum compass 11 can be disposed at a position where the quantum compass 11 is inconspicuous, and deterioration of the designability of the driving compartment 22 due to the disposition of the quantum compass 11 can be prevented. In such a configuration, the quantum compass 11 can be disposed at a position as low as possible in the driving compartment 22. As a result, when the vehicle body 2 is inclined, the displacement amount of the quantum compass 11 can be reduced as much as possible, and a decrease in the accuracy of position measurement by the quantum compass 11 can be suppressed.

In the example illustrated in FIG. 24, the quantum compass 11 is supported by the floor 2202. That is, the quantum compass 11 is disposed in the vicinity of the seat portion 221. The quantum compass 11 may be directly attached to the floor 2202 or indirectly attached to the floor 2202 via a support member. A method for attaching the quantum compass 11 to the floor 2202 or the support member may use, but not limited to, fixing tools such as bolts, adhesive, or the like. The method for attaching the support member to which the quantum compass 11 is attached to the floor 2202 may also use fixing tools such as bolts, adhesive, or the like. When the quantum compass 11 is supported by the floor 2202, an attachment space can be easily secured, and thus the quantum compass 11 can be easily attached. Further, in such a configuration, the quantum compass 11 can be stably supported.

As illustrated in FIG. 24, the quantum compass 11 supported by the floor 2202 is preferably disposed at a position surrounded by the outer peripheral walls constituting the seat support portion 2212. Therefore, it is possible to prevent the driver from unexpectedly coming into contact with the quantum compass 11 and to prevent deterioration of the designability of the driving compartment 22. Further, in such a configuration, it is possible to prevent the quantum compass 11 from being exposed to rainwater or the like without providing a protective cover.

In this example, the quantum compass 11 disposed between the seat surface 221a and the floor 2202 is disposed on the floor 2202, but this is merely an example. That is, the quantum compass 11 may be disposed in the seat portion 221. For example, the quantum compass 11 may be supported by the seat support portion 2212. In this case, the quantum compass 11 can be disposed inside the seat support portion 2212. In such a configuration, it is possible to prevent the quantum compass 11 from being exposed to rainwater or the like without providing a protective cover. Therefore, it is possible to prevent the driver from unexpectedly coming into contact with the quantum compass 11 and to prevent deterioration of the designability of the driving compartment 22.

As described above, the seat support portion 2212 may include an adjustment mechanism that adjusts the position of the seat 2211. In such a case, the seat support portion 2212 includes a portion that is repositioned by adjustment using the adjustment mechanism. When the quantum compass 11 is supported by the seat support portion 2212 including such a portion that is repositioned, the quantum compass 11 is preferably disposed so as to avoid the portion that is repositioned.

### 5-2-12. Twelfth Example

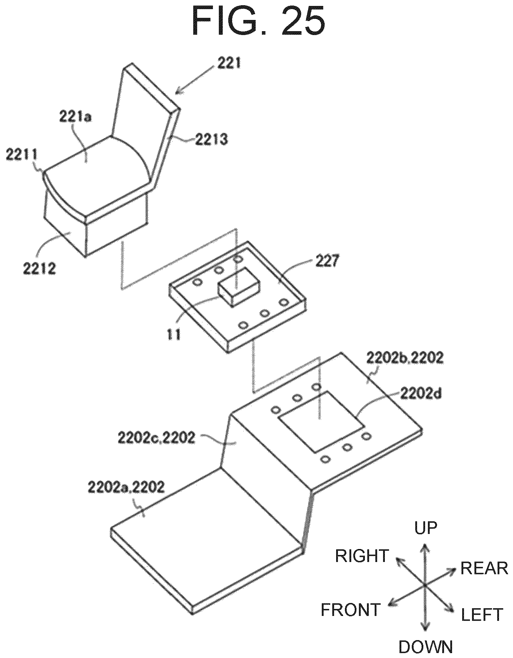

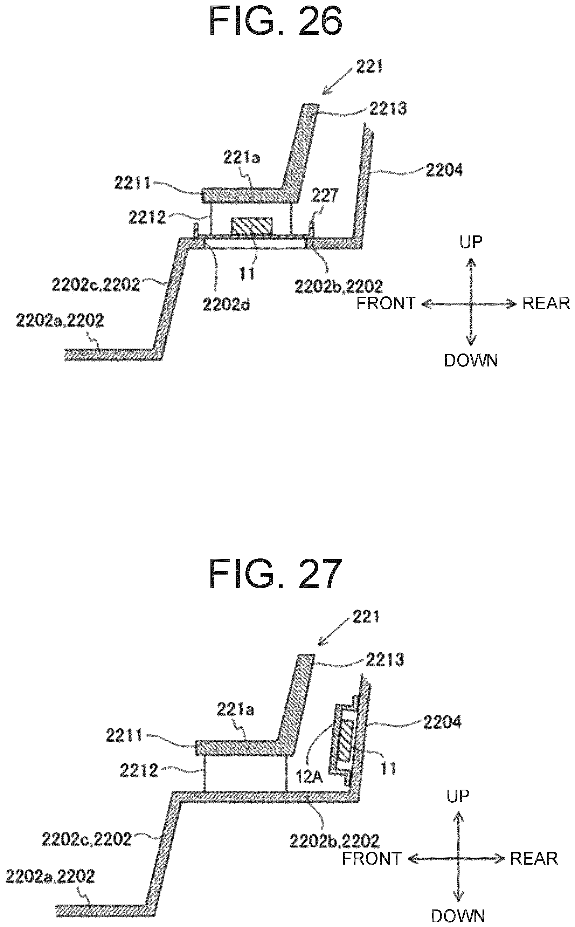

FIG. 25 is a schematic diagram for describing a twelfth example of the disposition of the quantum compass 11, illustrating the seat portion 221 and the vicinity thereof in an exploded manner. FIG. 26 is a longitudinal sectional view schematically illustrating a twelfth example of the disposition of the quantum compass 11. FIG. 26 is a longitudinal sectional view of a structure obtained after the elements 221, 225, and 2202 illustrated in FIG. 25 are assembled.

In the twelfth example, the work vehicle 1 includes a seat pan 227. The seat pan 227 is disposed on the floor 2202 and supports the seat portion 221. The seat pan 227 is provided so as to be attachable to and detachable from the floor 2202. Specifically, the seat pan 227 is disposed on the upper floor 2202b so as to cover, from the upper side, a floor opening 2202d that penetrates the upper floor 2202b in the up-down direction. The floor opening 2202d is provided for the purpose of, for example, facilitating maintenance of components disposed below the floor 2202, such as hydraulic pipes. The seat pan 227 is detachably attached to the upper floor 2202b using, for example, fixing tools such as bolts. In the examples illustrated in FIGS. 25 and 26, the seat pan 227 has a rectangular box shape in a plan view, but the shape of the seat pan 227 may be appropriately changed. For example, the seat pan 227 may have a simple plate shape or the like.

In the twelfth example, the quantum compass 11 is supported by the seat pan 227. In such a configuration, the quantum compass 11 can be disposed between the seat surface 221a and the floor 2202 and in the vicinity of the seat portion 221, as in the eleventh example. As a result, as in the eleventh example, the quantum compass 11 can be disposed at a position where the quantum compass 11 stays out of the driver's field of view, and deterioration of the designability of the driving compartment 22 due to the disposition of the quantum compass 11 can be prevented. Further, in such a configuration, the quantum compass 11 can be disposed at a position as low as possible in the driving compartment 22, and displacement of the quantum compass 11 can be reduced when the vehicle body 2 is inclined.

A method for attaching the quantum compass 11 to the seat pan 227 may use, but not limited to, fixing tools such as bolts, adhesive, or the like. The quantum compass 11 may be attached to the seat pan 227 via a support member. Even in the twelfth example, as in the eleventh example, the quantum compass 11 supported by the seat pan 227 is preferably disposed at a position surrounded by the outer peripheral walls constituting the seat support portion 2212.

### 5-2-13. Thirteenth Example

FIG. 27 is a longitudinal sectional view schematically illustrating a thirteenth example of the disposition of the quantum compass 11. As illustrated in FIG. 27, in the thirteenth example, the quantum compass 11 is disposed behind the seat portion 221. In such a configuration, the quantum compass 11 can be disposed at a position where the quantum compass 11 cannot be seen by the driver sitting on the seat portion 221, and thus it is possible to prevent the field of view of the driver from being blocked by the quantum compass 11. Even in this example, the quantum compass 11 is disposed in the vicinity of the seat portion 221.

Specifically, the quantum compass 11 is disposed between the seat portion 221 and the driving compartment rear wall 2204 (in the front-rear direction). The quantum compass 11 is disposed between a rear surface of the seat portion 221 and a front surface of the driving compartment rear wall 2204. Note that the rear surface of the seat portion 221 includes a rear surface of the backrest portion 2213 and a rear surface of the seat support portion 2212. It is possible to effectively utilize a space formed between the seat portion 221 and the driving compartment rear wall 2204 in order to dispose the quantum compass 11.

More specifically, the quantum compass 11 is supported by the driving compartment rear wall 2204 via the support member 12A. As a result, the quantum compass 11 can be mounted in a relatively wide space behind the seat portion 221, and thus the quantum compass 11 can be easily mounted. Further, in such a configuration, the quantum compass 11 can be stably supported without newly providing a strong support structure. In the present embodiment, the quantum compass 11 is configured to be indirectly attached to the driving compartment rear wall 2204 via the support member 12A, but the quantum compass 11 may be directly attached to the driving compartment rear wall 2204. The attachment of the quantum compass 11 to the support member 12A and the attachment of the support member 12A to the driving compartment rear wall 2204 may use, but not limited to, for example, fixing tools such as bolts, adhesive, or the like.

In this example, the support member 12A also serves as a protective cover that prevents the quantum compass 11 from being exposed to rainwater or the like. However, a protective cover may be provided separately from the support member 12A. In addition, the protection cover may not be provided when the quantum compass 11 is not exposed to rainwater, as in the cabin-type work vehicle 1A.

The quantum compass 11 disposed between the seat portion 221 and the driving compartment rear wall 2204 in the front-rear direction may be supported by the floor 2202 or the seat portion 221 instead of the driving compartment rear wall 2204.

### 5-2-14. Fourteenth Example

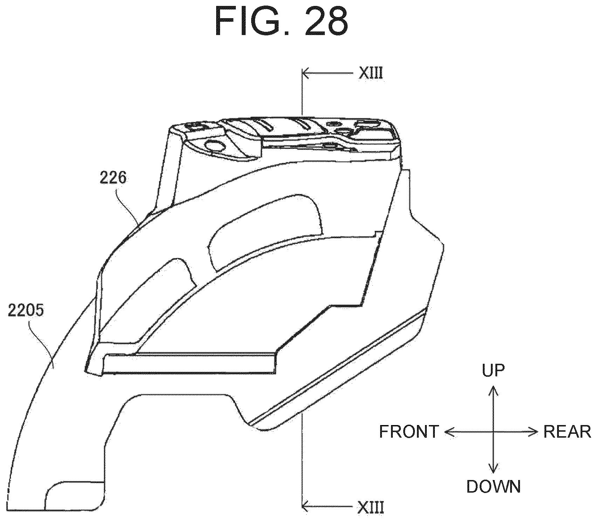

FIG. 28 is a schematic diagram for describing a fourteenth example of the disposition of the quantum compass 11. FIG. 28 is a side view of the right driving compartment side wall 2205 (see FIGS. 2 and 3) constituting the driving compartment 22 (driving compartment base portion 220) as viewed from the right (from the seat portion 221 side). As illustrated in FIG. 28 (see also FIG. 2), a side cover 226 is detachably attached to the right driving compartment side wall 2205. Specifically, the side cover 226 serves as a lever guide that guides movement of a lever (not illustrated) provided on the right side of the seat portion 221.

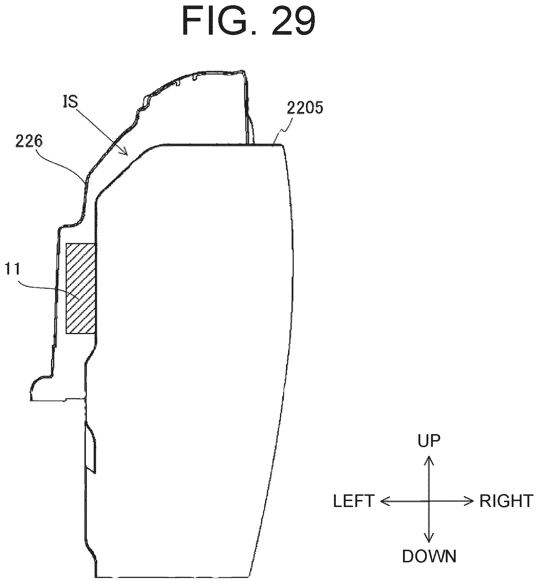

FIG. 29 is a schematic cross-sectional view taken along line XIII-XIII illustrated in FIG. 28. As illustrated in FIG. 29, in the fourteenth example, the quantum compass 11 is disposed in a space IS provided between the side cover 226 and the right driving compartment side wall 2205. The quantum compass 11 is disposed in the internal space IS formed by attaching the side cover 226 to the right driving compartment side wall 2205. In this example, the quantum compass 11 is disposed on the right side of the seat portion 221 (an example of the vicinity of the seat portion 221), but the similar internal space IS may be provided on the left side of the seat portion 221, and the quantum compass 11 may be disposed on the left side of the seat portion 221.

By disposing the quantum compass 11 in the internal space IS formed by attaching the side cover 226 to the driving compartment side wall 2205, the quantum compass 11 can be disposed at a position where the quantum compass 11 is less likely to be exposed to rainwater, mud, or the like. In such a configuration, the quantum compass 11 can be disposed at a position where the quantum compass 11 cannot be seen by the driver sitting on the seat portion 221, and thus it is possible to prevent the field of view of the driver from being blocked by the quantum compass 11. Further, in such a configuration, it is possible to prevent deterioration of the designability of the driving compartment 22 due to the disposition of the quantum compass 11. Further, in such a configuration, a harness (not illustrated) connected to the quantum compass 11 can also be hidden by the side cover 226. Further, by attaching the quantum compass 11 to the driving compartment side wall 2205, the quantum compass 11 can be stably supported without newly providing a strong support structure.

In this example, the quantum compass 11 is disposed on a left side surface of the right driving compartment side wall 2205. However, the quantum compass 11 may be disposed at another position such as an upper surface or a front surface of the right driving compartment side wall 2205. The quantum compass 11 is preferably disposed at a position where the quantum compass 11 can be seen from above, from the front, or from the side (the left in this example) when the side cover 226 is removed. In such a configuration, the quantum compass 11 can be easily attached/detached or maintained by removing the side cover 226. The quantum compass 11 may be disposed not on the right driving compartment side wall 2205 but on an inner surface of the side cover 226.

The quantum compass 11 may be directly attached to the right driving compartment side wall 2205 or may be attached to the right driving compartment side wall 2205 via a support member. Such attaching methods may use, but not limited to, fixing tools such as bolts, adhesive, or the like.

### 5-2-15. Fifteenth Example

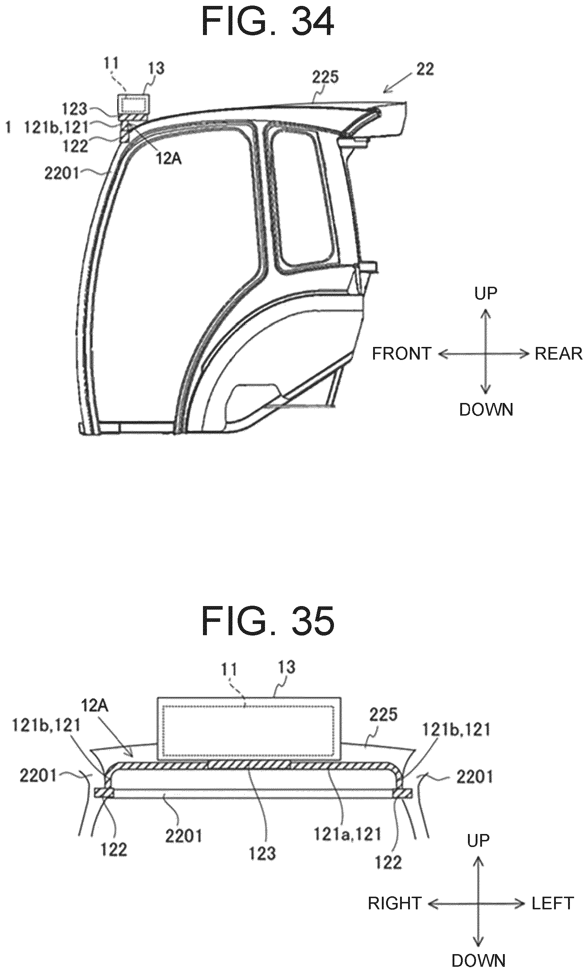

FIG. 34 is a side view schematically illustrating a fifteenth example of the disposition of the quantum compass 11. FIG. 35 is a front view schematically illustrating the fifteenth example of the disposition of the quantum compass 11. Note that FIG. 34 is a schematic side view of the cabin 22. FIG. 35 is a diagram of the vicinity of the roof 225 as viewed from the front (front side).

In the fifteenth example, the quantum compass 11 is supported by the cabin frame 2201. Using such a configuration, the quantum compass 11 can be supported by a member with high rigidity. Note that the quantum compass 11 may be directly or indirectly supported by the cabin frame 2201.

In the present example, the quantum compass 11 is attached to the cabin frame 2201 via the support member 12A. That is, the quantum compass 11 is indirectly supported by the cabin frame 2201. By interposing the support member 12A, the degree of freedom of the layout can be improved when the quantum compass 11 is mounted on the cabin 22.

In the present example, as illustrated in FIGS. 34 and 35, the support member 12A includes a frame portion 121, a pair of left and right pedestals 122, and a central plate portion 123. The frame portion 121 includes a rod-shaped portion 121a extending in the left-right direction, and leg portions 121b provided at both left and right end portions of the rod-shaped portion 121a and extending downward. The pair of left and right pedestals 122 are respectively fixed to the left and right ends on the upper side of a front-end portion of the cabin frame 2201. The left and right leg portions 121b of the frame portion 121 are fixed to the pedestals 122, whereby the frame portion 121 is erected in an inverted U-shape in the front upper portion of the cabin 22. The central plate portion 123 is fixed to the upper side of a central portion in the left-right direction of the rod-shaped portion 121a. The configuration of the support member 12A described above is merely an example, and may be changed as appropriate.

The quantum compass 11 is attached to the support member 12A in a state of being accommodated in the case 13. In FIGS. 34 and 35, since the quantum compass 11 is accommodated in the case 13 and cannot be seen actually, the quantum compass 11 is indicated by a broken line. Such a method for displaying the quantum compass 11 may also be used in other figures. The case 13 is preferably a waterproof case having a function of preventing water from entering the inside of the case. In addition, the case 13 preferably has a lid which can be opened and closed in consideration of maintainability or the like. The quantum compass 11 disposed outside the cabin 22 can be protected from rainwater or the like by accommodating the quantum compass 11 in the case 13.

Specifically, the case 13 accommodating the quantum compass 11 is fixed to an upper surface of the central plate portion 123. The case 13 is preferably fixed to the central plate portion 123 using, for example, detachable fixing tools such as bolts. The case 13 accommodating the quantum compass 11 is disposed above the front portion of the cabin 22. Further, the case 13 accommodating the quantum compass 11 is disposed at a central portion in the left-right direction of the vehicle in a plan view.

As can be seen from the above, in the present example, the quantum compass 11 is disposed at the central portion in the left-right direction of the vehicle in a plan view. The quantum compass 11 is disposed in the front portion of the cabin 22. Therefore, the quantum compass 11 can be disposed near the control point (for example, a central portion of the four wheels 3) in the automatic traveling in a plan view, and it is possible to prevent a process for obtaining the position of the vehicle itself using the quantum compass 11 from being complicated.

In addition, in the present example, the quantum compass 11 is disposed above the cabin frame 2201. Such a configuration can prevent an occupant such as a driver from unexpectedly coming into contact with the quantum compass 11. Although the quantum compass 11 is disposed outside the cabin 22, since the quantum compass 11 is accommodated in the case 13, the quantum compass 11 is less likely to be affected by rainwater, dust, or the like.

### 5-2-16. Sixteenth Example

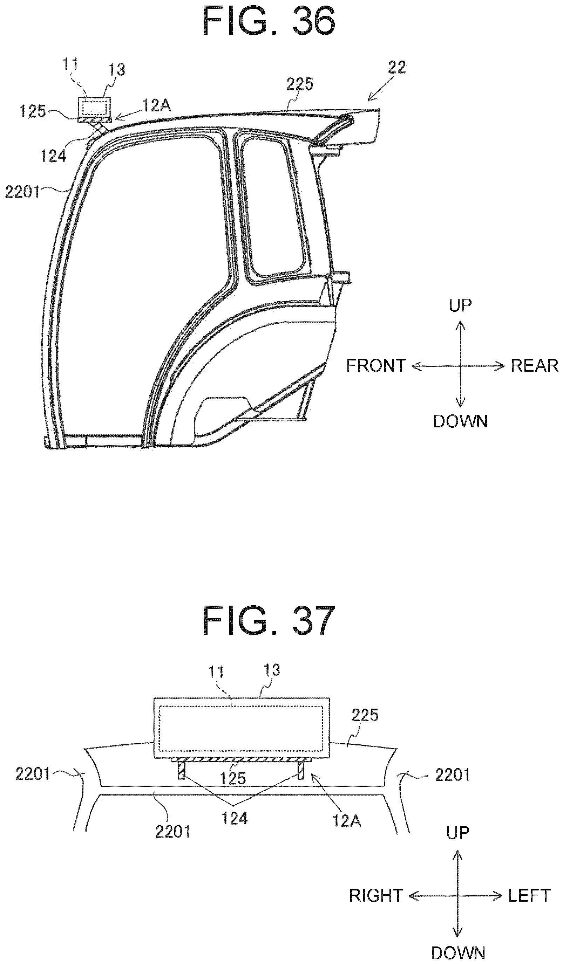

FIG. 36 is a side view schematically illustrating a sixteenth example of the disposition of the quantum compass 11. FIG. 37 is a front view schematically illustrating the sixteenth example of the disposition of the quantum compass 11. Note that FIG. 36 is a schematic side view of the cabin 22. FIG. 37 is a diagram of the vicinity of the roof 225 as viewed from the front. Even in the sixteenth example, similarly to the fifteenth example, the quantum compass 11 is disposed above the front portion of the cabin 22 (cabin frame 2201) in a state of being accommodated in the case 13. In the description of the sixteenth example, the description of the contents common to the fifteenth example will be omitted as much as possible.

In the sixteenth example, the quantum compass 11 is supported by the roof 225. Note that the roof 225 refers to a roof portion (roof part) of the cabin 22. When the quantum compass 11 is supported by the roof 225, it is possible to prevent an occupant such as a driver from unexpectedly coming into contact with the quantum compass 11. The roof 225 is attached to the cabin frame 2201.

In the present example, the quantum compass 11 supported by the roof 225 is disposed outside the cabin 22, but may be disposed inside the cabin 22, and such an example will be described later. Further, in the present example, the quantum compass 11 is disposed in a front portion of the roof 225. However, this is an example, and the quantum compass 11 may be disposed at another position of the roof 225, such as a central portion of the roof 225. However, when the quantum compass 11 is disposed in the front portion of the roof 225, there is an advantage that the quantum compass 11 can be disposed near the control point (for example, the central portion of the four wheels 3) in the automatic traveling in a plan view.

The quantum compass 11 may be directly or indirectly supported by the roof 225, but in the present example, the quantum compass 11 is indirectly supported by the roof 225. The quantum compass 11 is supported by the roof 225 via the support member 12A. As a result, the degree of freedom of the layout can be improved when the quantum compass 11 is mounted on the cabin 22.

In the present example, as illustrated in FIGS. 36 and 37, the support member 12A includes a pair of left and right support piece portions 124 and a rectangular plate-shaped attachment plate portion 125 extending in the left-right direction. The pair of left and right support piece portions 124 are disposed symmetrically with respect to a center line CL (see FIG. 2) that bisects the work vehicle 1 in the left-right direction in a plan view. Each support piece portion 124 has its lower end portion fixed to the roof 225 and extends upward from the roof 225. The attachment plate portion 125 is fixed to each upper end portion of the pair of left and right support piece portions 124. The configuration of the support member 12A described above is merely an example, and may be changed as appropriate.

The quantum compass 11 is attached to the support member 12A in a state of being accommodated in the case 13. Specifically, the case 13 accommodating the quantum compass 11 is fixed to an upper surface of the attachment plate portion 125. The case 13 is preferably fixed to the attachment plate portion 125 using, for example, detachable fixing tools such as bolts. The quantum compass 11 is disposed at the central portion in the left-right direction of the vehicle in a plan view.

### 5-2-17. Seventeenth Example

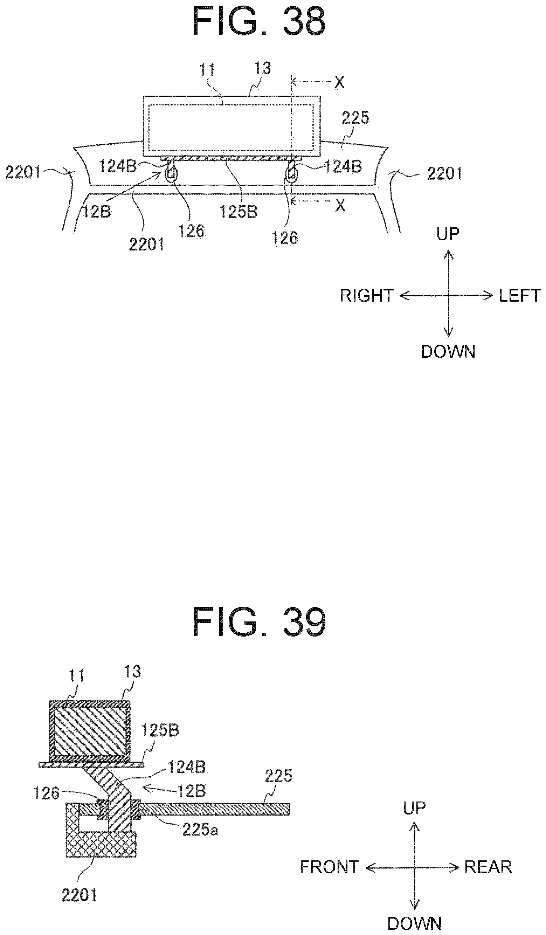

FIG. 38 is a front view schematically illustrating the seventeenth example of the disposition of the quantum compass 11. FIG. 39 is a schematic cross-sectional view taken along line X-X illustrated in FIG. 38. Note that FIG. 38 is a diagram of the vicinity of the roof 225 as viewed from the front. Even in the seventeenth example, similarly to the fifteenth and sixteenth examples, the quantum compass 11 is disposed above the front portion of the cabin 22 (cabin frame 2201) in a state of being accommodated in the case 13. In the description of the seventeenth example, the description of the contents common to the fifteenth and sixteenth examples will be omitted as much as possible.

In the seventeenth example, the configuration of the support member 12B to which the case 13 accommodating the quantum compass 11 is attached is substantially the same as that of the sixteenth example. The support member side 12B includes a pair of left and right support piece portions 124B and a rectangular plate-shaped attachment plate portion 125B extending in the left-right direction. However, in the seventeenth embodiment, unlike the sixteenth example, the support piece portions 124B are fixed not to the roof 225 but to the cabin frame 2201 at least a portion of which is located below an upper surface of the roof 225. Using such a configuration, the quantum compass 11 can be firmly supported because the support member 12B can be attached to a member with high rigidity.

Although the support piece portions 124B are directly attached to the cabin frame 2201 in the present example, the support piece portions 124B may be attached to an attachment seat attached to the cabin frame 2201.

In the present example, since the support piece portions 124B penetrate the upper surface of the roof 225, openings 225a are provided on the upper surface of the roof 225. In order to prevent water, dust, or the like from entering the inside of the cabin 22 from the opening 225a, grommets 126 are preferably disposed in the openings 225a, as illustrated in FIG. 39 and the like. Note that the grommet 126 is preferably a waterproof grommet having at least a waterproof function.

### 5-2-18. Eighteenth Example

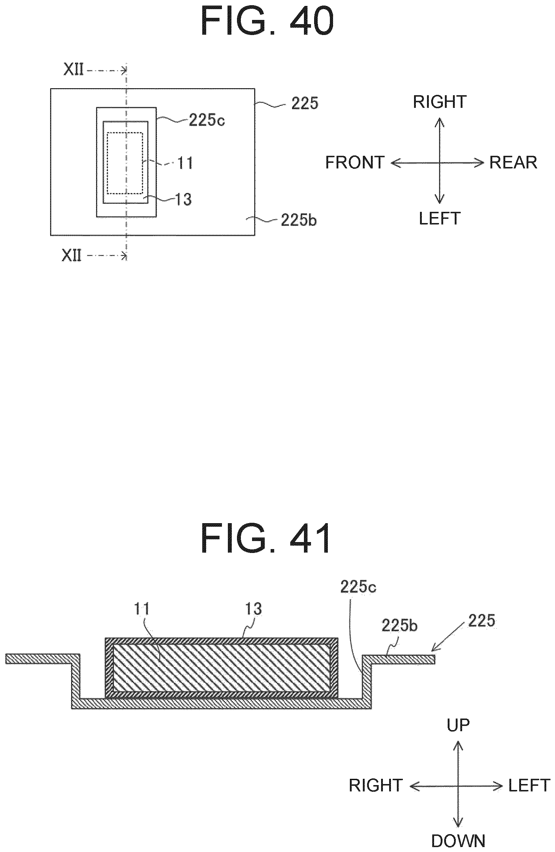

FIG. 40 is a plan view schematically illustrating an eighteenth example of the disposition of the quantum compass 11. FIG. 41 is a schematic cross-sectional view taken along line XII-XII illustrated in FIG. 40. Note that FIG. 40 is a diagram of the roof 225 as viewed from above. Even in the eighteenth example, the quantum compass 11 is disposed outside the cabin 22 in a state of being accommodated in the case 13, similarly to the fifteenth, sixteenth, and seventeenth examples. In the eighteenth example, the quantum compass 11 is supported by the roof 225, similarly to the sixteenth example. In the description of the eighteenth example, the description of the contents common to the fifteenth to seventeenth examples will be omitted as much as possible.

In the present example, the roof 225 has a recess 225c that is recessed downward in the upper surface 225b of the roof 225. The case 13 accommodating the quantum compass 11 is disposed in the recess 225c. The case 13 disposed in the recess 225c may be directly fixed to the roof 225 as illustrated in FIG. 41, or may be fixed to the roof 225 via an attachment seat provided in the recess 225c.

In the present example, since the case 13 is disposed in the recess 225c, at least a portion of the quantum compass 11 supported by the roof 225 is disposed below the upper surface 225b of the roof 225. In the example illustrated in FIG. 41, a portion of the quantum compass 11 is disposed at a position lower than the upper surface 225b of the roof 225, but the entire quantum compass 11 may be disposed at a position lower than the upper surface 225b of the roof 225. Using such a configuration, the height of the work vehicle 1 in which the quantum compass 11 is disposed on the roof 225 can be reduced.

The recess 225c is preferably provided at the central portion in the left-right direction of the roof 225. Further, the recess 225c is preferably provided on the front side of the roof 225 as much as possible. In the present example, the recess 225c is provided in the upper surface 225b of the roof 225, but an opening penetrating the roof 225 in the up-down direction may be provided instead of the recess 225c. In this case, an attachment seat for attaching the case 13 to the roof 225 need to be provided in the roof 13.

### 5-2-19. Nineteenth Example

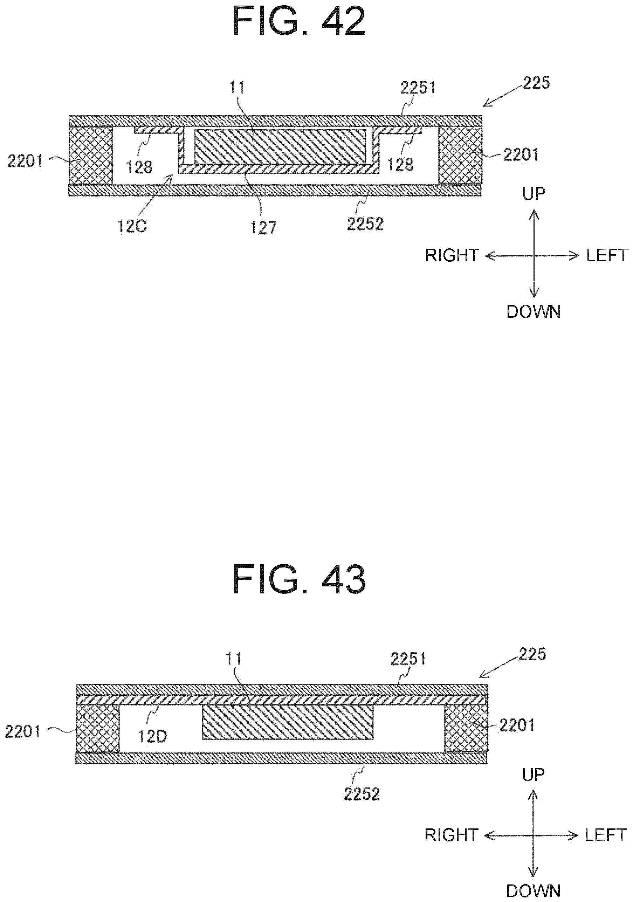

FIG. 42 is a cross-sectional view schematically illustrating a nineteenth example of the disposition of the quantum compass 11. FIG. 42 is a longitudinal sectional view of the roof 225. In the fifteenth to eighteenth examples, the quantum compass 11 is disposed outside the cabin 22. Unlike these examples, in the nineteenth example, the quantum compass 11 is disposed inside the cabin 22. In the description of the nineteenth example, the description of the contents common to the fifteenth to eighteenth examples will be omitted as much as possible.

As illustrated in FIG. 42, the quantum compass 11 is disposed inside the roof 225. Specifically, the roof 225 includes an outer roof 2251 and an inner roof 2252. The quantum compass 11 is disposed between the outer roof 2251 and the inner roof 2252. When the quantum compass 11 is disposed inside the roof 225, the quantum compass 11 can be protected from rainwater or the like without being accommodated in a case. Further, such a configuration can prevent an occupant such as a driver from unexpectedly coming into contact with the quantum compass 11. In addition, the quantum compass 11 can be disposed in a place where the quantum compass 11 is inconspicuous, and the designability of the cabin 22 can be improved.

The outer roof 2251 forms an outer surface of the cabin 22. Specifically, the outer roof 2251 forms an upper surface of the cabin 22. The inner roof 2252 is disposed below the outer roof 2251 with a gap therebetween. The inner roof 2252 forms an inner surface of the cabin 22. Specifically, the inner roof 2252 forms a ceiling of a room formed by the cabin 22. The outer roof 2251 and the inner roof 2252 are attached to the cabin frame 2201. The roof 225 illustrated in the fifteenth to eighteenth examples may also have an outer roof and an inner roof.

The quantum compass 11 is preferably supported by a support member provided in at least one of the outer roof 2251 and the inner roof 2252. Therefore, the attachment strength of the quantum compass 11 can be improved. In the present example, the quantum compass 11 is supported by a support member 12C provided on the outer roof 2251.

The support member 12C includes a support main body 127 having a U-shape in a cross-sectional view, and fixing portions 128 extending outward in the left-right direction from left and right upper end portions of the support main body 127. The left and right fixing portions 128 are fixed to a lower surface of the outer roof 2251, and thus the support member 12C is attached to the outer roof 2251. Fixation of the support member 12C to the outer roof 2251 may be performed using, for example, fixing tools such as bolts. The quantum compass 11 is fixed to an upper surface of the support main body 127 using, for example, fixing tools such as bolts, or adhesive.

The configuration of the support member 12C is merely an example, and may be changed as appropriate. The quantum compass 11 disposed inside the roof 225 is preferably provided at the central portion in the left-right direction of the work vehicle 1. Further, the quantum compass 11 disposed inside the roof 225 is preferably provided on the front side of the roof 225 as much as possible.

### 5-2-20. Twentieth Example

FIG. 43 is a cross-sectional view schematically illustrating a twentieth example of the disposition of the quantum compass 11. FIG. 43 is a longitudinal sectional view of the roof 225. In the twentieth example, as in the nineteenth example, the quantum compass 11 is disposed inside the roof 225. In the description of the twentieth example, the description of the contents common to the fifteenth to nineteenth examples will be omitted as much as possible.

As illustrated in FIG. 43, even in the present example, the quantum compass 11 is disposed between the outer roof 2251 and the inner roof 2252 in the up-down direction via a support member 12D, as in the nineteenth example. However, unlike the nineteenth example, in this example, the support member 12D is supported not by the roof 225 but by the cabin frame 2201. That is, the quantum compass 11 is supported by the cabin frame 2201 inside the roof 225. Using such a configuration, the quantum compass 11 can be supported by a member with higher rigidity than the roof 225, and the quantum compass 11 can be firmly supported.

Specifically, the support member 12D extends in the left-right direction, and left and right end portions of the support member 12D are fixed to the cabin frame 2201. In such a fixation, for example, fixing tools such as bolts may be used. For example, the support member 12D may be fixed to the cabin frame 2201 together with the outer roof 2251 using the same bolts. The support member 12D is a so-called beam-shaped member and can also be referred to as a beam bracket. The quantum compass 11 is fixed to a lower surface of the support member 12D using, for example, fixing tools such as bolts, or adhesive. The configuration of the support member 12D is merely an example, and may be changed as appropriate. For example, the support member 12D may have a shape similar to that of the support member 12C of the nineteenth example. In this case, the quantum compass 11 may be fixed to an upper surface of the support member.

### 6. Another Embodiment

Next, another embodiment different from the above-described embodiments will be described. In the description of another embodiment, the description of the contents overlapping with those of the above-described embodiments will be omitted as much as possible.

In the embodiments described above, the quantum compass 11 is provided in the cabin 22. However, some of the work vehicles 1 do not include the cabin 22.

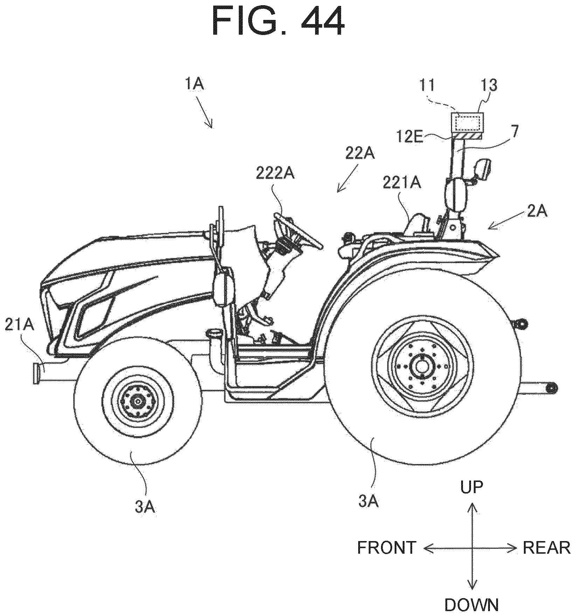

FIG. 44 is a side view illustrating a schematic configuration of a work vehicle 1A according to another embodiment. The work vehicle 1A illustrated in FIG. 44 is also a tractor. The work vehicle 1A includes a vehicle body 2A and wheels 3A. The vehicle body 2A includes a base portion 21A configured to include a transmission case and the like, and a driving compartment 22A supported by the base portion 21A. The driving compartment 22A is provided with a seat portion 221A, a steering portion 222A, and the like. The driving compartment 22A does not form a room, and is exposed to the outside of the vehicle.

The driving compartment 22A is provided with a ROPS frame 7 disposed behind the seat portion 221A. The ROPS frame 7 has a gantry shape (inverted U-shape) in a front view. The ROPS frame 7 functions to protect the driver when the work vehicle 1A falls over. The ROPS frame 7 is supported by a frame member constituting the driving compartment 22A, similarly to the seat portion 221A.

In the present embodiment, the quantum compass 11 is provided in the ROPS frame 7. The quantum compass 11 is supported by the ROPS frame 7. The quantum compass 11 may be directly or indirectly attached to the ROPS frame 7. In the present example, the quantum compass 11 is attached to the ROPS frame 7 in a state of being accommodated in a case 13 that is preferably a waterproof case. Specifically, the case 13 accommodating the quantum compass 11 is attached to an upper frame constituting the gantry-shaped ROPS frame 7 via a support member 12E. The case 13 is attached to the ROPS frame 7 such that the quantum compass 11 is located at the central portion in the left-right direction of the work vehicle 1. The position where the case 13 is attached to the ROPS frame 7 is not limited to the position in the present embodiment, and may be changed as appropriate.

### 7. Notes and the like

Various technical features disclosed in the present specification can be changed in various ways without departing from the spirit of the technical creation thereof. In addition, the plurality of embodiments, examples, and modifications described in the present specification may be combined to the extent possible.

### 8. Appendix

An exemplary work vehicle according to the present invention may include a driving compartment having a floor, a power transmission portion disposed below the floor, and a quantum compass disposed between the floor and the power transmission portion (first configuration). An exemplary work vehicle according to the present invention may include a dashboard portion provided in a front portion of a driving compartment, and a quantum compass provided in the dashboard portion (tenth configuration). An exemplary work vehicle according to the present invention may include a driving compartment having a floor, a seat portion supported by the floor, and a quantum compass provided in the seat portion or the vicinity thereof (seventeenth configuration). Further, an exemplary work vehicle according to the present invention may include a cabin, and a quantum compass provided in the cabin (twenty seventh configuration).

In the work vehicle of the first configuration, the quantum compass may be supported by the floor (second configuration).

In the work vehicle of the second configuration, the quantum compass may be supported by the floor via a support member (third configuration).

In the work vehicle of the first configuration, the quantum compass may be supported by a driving compartment frame constituting the driving compartment (fourth configuration).

In the work vehicle of the fourth configuration, the quantum compass may be supported by the driving compartment frame via a support member (fifth configuration).

The work vehicle of any one of the first to fifth configurations may include a base portion that supports the driving compartment via a vibration-proof member (sixth configuration).

In the work vehicle of the first configuration, the quantum compass may be supported by the power transmission portion via a support member (seventh configuration).

In the work vehicle of the seventh configuration, the support member may include a vibration-proof member (eighth configuration).

The work vehicle of any one of the first to eighth configurations may include a cover member that covers the quantum compass (ninth configuration).

In the work vehicle of the tenth configuration, the dashboard portion may include a cover member, and the quantum compass may be supported by the cover member (eleventh configuration).

In the work vehicle of the eleventh configuration, the quantum compass may be supported by the cover member via a support member (twelfth configuration).

In the work vehicle of the tenth configuration, the dashboard portion may have a driving compartment front wall in a front portion of the dashboard portion, and the quantum compass may be supported by the driving compartment front wall (thirteenth configuration).

In the work vehicle of the thirteenth configuration, the quantum compass may be supported by the driving compartment front wall via a support member (fourteenth configuration).

In the work vehicle of any one of the tenth to fourteenth configurations, the quantum compass may be disposed inside the dashboard portion (fifteenth configuration).

The work vehicle of any one of the tenth to fifteenth configurations may include a base portion that supports the driving compartment via a vibration-proof member (sixteenth configuration).

In the work vehicle of the seventeenth configuration, the vicinity of the seat portion may be located above the floor (eighteenth configuration).

In the work vehicle of the seventeenth or eighteenth configuration, the quantum compass may be disposed between a seat surface of the seat portion and the floor (nineteenth configuration).

In the work vehicle of the nineteenth configuration, the seat portion may include a seat having the seat surface and a seat support portion that supports the seat, and the quantum compass may be supported by the seat support portion (twentieth configuration).

The work vehicle of the nineteenth configuration may include a seat pan that is disposed on the floor and supports the seat portion, and the quantum compass may be supported by the seat pan (twenty first configuration).

In the work vehicle of any one of the seventeenth to nineteenth configurations, the quantum compass may be supported by the floor (twenty second configuration).

In the work vehicle of the seventeenth or eighteenth configuration, the quantum compass may be disposed behind the seat portion (twenty third configuration).

In the work vehicle of the twenty third configuration, the driving compartment may include a driving compartment rear wall disposed behind the seat portion, and the quantum compass may be disposed between the seat portion and the driving compartment rear wall (twenty fourth configuration).

In the work vehicle of the twenty fourth configuration, the quantum compass may be supported by the driving compartment rear wall via a support member (twenty fifth configuration).

The work vehicle of any one of the seventeenth to twenty fifth configurations may include a base portion that supports the driving compartment via a vibration-proof member (twenty sixth configuration).

The work vehicle of the twenty seventh configuration may include a cabin frame constituting the cabin, and the quantum compass may be supported by the cabin frame (twenty eighth configuration).

In the work vehicle of the twenty eighth configuration, the quantum compass may be attached to the cabin frame via a support member (twenty ninth configuration).

In the work vehicle of the twenty eighth or twenty ninth configuration, the quantum compass may be disposed above the cabin frame (thirtieth configuration).

In the work vehicle of the twenty seventh configuration, the cabin may include a roof, and the quantum compass may be supported by the roof (thirty first configuration).

In the work vehicle of the thirty first configuration, the quantum compass may be disposed in a front portion of the roof (thirty second configuration).

In the work vehicle of the thirty first or thirty second configuration, at least a portion of the quantum compass may be disposed below an upper surface of the roof (thirty third configuration).

In the work vehicle of any one of the thirty first to thirty third configurations, the quantum compass may be disposed inside the roof (thirty fourth configuration).

In the work vehicle of any one of the thirty first to thirty fourth configurations, the roof may include an outer roof and an inner roof, and the quantum compass may be supported by a support member provided in at least one of the outer roof and the inner roof (a thirty fifth configuration).

In the work vehicle of any one of the twenty seventh to twenty ninth configurations, the cabin may include a cabin frame and a roof, and the quantum compass may be supported by the cabin frame inside the roof (thirty sixth configuration).

In the work vehicle of any one of the twenty seventh to thirty sixth configurations, the quantum compass may be disposed at a central portion in a left-right direction of the vehicle in a plan view (thirty seventh configuration).

### REFERENCE SIGNS LIST

1, 1A: work vehicle
5: power transmission portion
10, 13C2: vibration-proof member
11: quantum compass
12A, 12B, 12C, 12D, 12E, 13, 13A, 13B, 13C: support member
14: cover member
21: base portion
22, 22A: driving compartment
221: seat portion
221a: seat surface
223: dashboard portion
225: roof
227: seat pan
2201, 2201A: driving compartment frame
2202, 2202A: floor
2203: driving compartment front wall (air cut plate)
2204, 2204A: driving compartment rear wall
2211: seat
2212: seat support portion
2231: dash cover (cover member)
2251: outer roof
2252: inner roof

## Claims

1. A work vehicle comprising:
a dashboard portion provided in a front portion of a driving compartment, and
a quantum compass provided in the dashboard portion.

2. The work vehicle according to claim 1, wherein
the dashboard portion includes a cover member, and
the quantum compass is supported by the cover member.

3. The work vehicle according to claim 2, wherein the quantum compass is supported by the cover member via a support member.

4. The work vehicle according to claim 1, wherein
the dashboard portion includes a driving compartment front wall in a front portion of the dashboard portion, and
the quantum compass is supported by the driving compartment front wall.

5. The work vehicle according to claim 4, wherein the quantum compass is supported by the driving compartment front wall via a support member.

6. The work vehicle according to claim 1, wherein the quantum compass is disposed inside the dashboard portion.

7. A work vehicle comprising:
a driving compartment having a floor,
a seat portion supported by the floor, and
a quantum compass provided in the seat portion or the vicinity thereof.

8. The work vehicle according to claim 7, wherein the vicinity of the seat portion is located above the floor.

9. The work vehicle according to claim 7, wherein the quantum compass is disposed between a seat surface of the seat portion and the floor.

10. The work vehicle according to claim 9, comprising a seat pan that is disposed on the floor and supports the seat portion, wherein
the quantum compass is supported by the seat pan.

11. The work vehicle according to claim 7, wherein the quantum compass is supported by the floor.

12. The work vehicle according to claim 7, comprising a base portion that supports the driving compartment via a vibration-proof member.

13. A work vehicle comprising:
a cabin, and
a quantum compass provided in the cabin.

14. The work vehicle according to claim 13, comprising a cabin frame constituting the cabin, wherein
the quantum compass is supported by the cabin frame.

15. The work vehicle according to claim 14, wherein the quantum compass is attached to the cabin frame via a support member.

16. The work vehicle according to claim 13, wherein
the cabin includes a roof, and
the quantum compass is supported by the roof.

17. The work vehicle according to claim 16, wherein the quantum compass is disposed in a front portion of the roof.

18. The work vehicle according to claim 16, wherein the quantum compass is disposed inside the roof.

19. The work vehicle according to claim 13, wherein
the cabin includes a cabin frame and a roof, and
the quantum compass is supported by the cabin frame inside the roof.

20. The work vehicle according to claim 13, wherein the quantum compass is disposed at a central portion in a left-right direction of the vehicle in a plan view.
